# EUROPEAN PATENT APPLICATION

(11) **EP 4 660 930 A1**
(43) Date of publication of application: **10.12.2025**
(21) Application number: 24750338.6
(22) Date of filing: 31.01.2024
(51) Int. Cl.: G06Q 50/10, G06Q 10/06

(54) **INFORMATION PROCESSING DEVICE AND PROGRAM**

(30) Priority: 31.01.2023 JP 2023013448; 12.10.2023 JP 2023177060
(71) Applicant: Kyocera Corporation, Kyoto-shi, Kyoto 612-8501 (JP)
(72) Inventor: SUZUKI Yu, Kyoto-shi, Kyoto 612-8501 (JP); MIYANAGA Yusuke, Kyoto-shi, Kyoto 612-8501 (JP); TATSUMI Kento, Kyoto-shi, Kyoto 612-8501 (JP)
(74) Representative: TBK
(86) International application number: PCT/JP2024/003065
(87) International publication number: WO 2024/162389

(57) **Abstract**

An interface communicates with a plurality of robots and a server. The server includes a plurality of pieces of robot identification information for identifying the plurality of robots. A controller obtains, through the interface, the plurality of pieces of robot identification information and a communication connection status of the plurality of robots with the server. The controller causes a display to display the plurality of pieces of robot identification information and the communication connection status in a viewable manner to allow selection of, through an input unit, at least one robot of the plurality of robots to perform at least one target task selected by a user from a plurality of tasks indicated by a plurality of pieces of task information generated using a robot of the plurality of robots.

## Description

### TECHNICAL FIELD

The present disclosure relates to an information processing device.

### BACKGROUND OF INVENTION

Patent Literature 1 describes a technique for providing a task instruction to a robot.

### CITATION LIST

### PATENT LITERATURE

Patent Literature 1: Japanese Unexamined Patent Application Publication No. 2008-68348

### SUMMARY

One or more aspects of the present disclosure are directed to an information processing device and a program. In one embodiment, an information processing device includes a display, an input unit that receives an input from a user, an interface, and a controller. The interface communicates with a plurality of robots and a server. The server includes a plurality of pieces of robot identification information for identifying the plurality of robots. The controller obtains, through the interface, the plurality of pieces of robot identification information and a communication connection status of the plurality of robots with the server. The controller causes the display to display the plurality of pieces of robot identification information and the communication connection status in a viewable manner to allow selection of, through the input unit, at least one robot of the plurality of robots to perform at least one target task selected by the user from a plurality of tasks indicated by a plurality of pieces of task information generated using a robot of the plurality of robots.

In one embodiment, a program is a program for causing a computer to function as the above information processing device.

### BRIEF DESCRIPTION OF THE DRAWINGS

FIG. 1 is a block diagram of an example information processing device.
FIG. 2 is a block diagram of an example robotic system.
FIG. 3 is a schematic diagram of an example display displayed on the information processing device.
FIG. 4 is a schematic diagram of an example display displayed on the information processing device.
FIG. 5 is a schematic diagram of an example display displayed on the information processing device.
FIG. 6 is a schematic diagram of an example display displayed on the information processing device.
FIG. 7 is a schematic diagram of an example display displayed on the information processing device.
FIG. 8 is a schematic diagram of multiple types of example status symbols.
FIG. 9 is a schematic diagram of an example display displayed on the information processing device.
FIG. 10 is a schematic diagram of an example display displayed on the information processing device.
FIG. 11 is a schematic diagram of an example display displayed on the information processing device.
FIG. 12 is a schematic diagram of an example display displayed on the information processing device.
FIG. 13 is a schematic diagram of an example display displayed on the information processing device.
FIG. 14 is a schematic diagram of an example display displayed on the information processing device.
FIG. 15 is a schematic diagram of an example display displayed on the information processing device.
FIG. 16 is a schematic diagram of an example display displayed on the information processing device.
FIG. 17 is a schematic diagram of an example display displayed on the information processing device.
FIG. 18 is a schematic diagram of an example display displayed on the information processing device.
FIG. 19 is a schematic diagram of an example display displayed on the information processing device.
FIG. 20 is a schematic diagram of an example display displayed on the information processing device.
FIG. 21 is a schematic diagram of an example display displayed on the information processing device.
FIG. 22 is a schematic diagram of an example display displayed on the information processing device.
FIG. 23 is a schematic diagram of an example display displayed on the information processing device.
FIG. 24 is a schematic diagram of an example display displayed on the information processing device.
FIG. 25 is a schematic diagram of multiple types of example symbols.
FIG. 26 is a schematic diagram of an example display displayed on the information processing device.
FIG. 27 is a schematic diagram of an example display displayed on the information processing device.
FIG. 28 is a schematic diagram of an example display displayed on the information processing device.
FIG. 29 is a schematic diagram of an example display displayed on the information processing device.
FIG. 30 is a schematic diagram of an example display displayed on the information processing device.
FIG. 31 is a schematic diagram of an example display displayed on the information processing device.
FIG. 32 is a schematic diagram of an example display displayed on the information processing device.
FIG. 33 is a schematic diagram of multiple types of example symbols.
FIG. 34 is a schematic diagram of an example display displayed on the information processing device.
FIG. 35 is a schematic diagram of an example display displayed on the information processing device.
FIG. 36 is a schematic diagram of an example display displayed on the information processing device.
FIG. 37 is a schematic diagram of an example display displayed on the information processing device.
FIG. 38 is a schematic diagram of an example display displayed on the information processing device.
FIG. 39 is a schematic diagram of an example display displayed on the information processing device.
FIG. 40 is a schematic diagram of an example display displayed on the information processing device.
FIG. 41 is a schematic diagram of an example display displayed on the information processing device.
FIG. 42 is a schematic diagram of an example display displayed on the information processing device.
FIG. 43 is a schematic diagram of an example display displayed on the information processing device.
FIG. 44 is a schematic diagram of an example display displayed on the information processing device.
FIG. 45 is a schematic diagram of an example display displayed on the information processing device.
FIG. 46 is a schematic diagram of an example display displayed on the information processing device.
FIG. 47 is a schematic diagram of an example display displayed on the information processing device.
FIG. 48 is a schematic diagram of an example display displayed on the information processing device.
FIG. 49 is a block diagram of an example robotic system.

### DESCRIPTION OF EMBODIMENTS

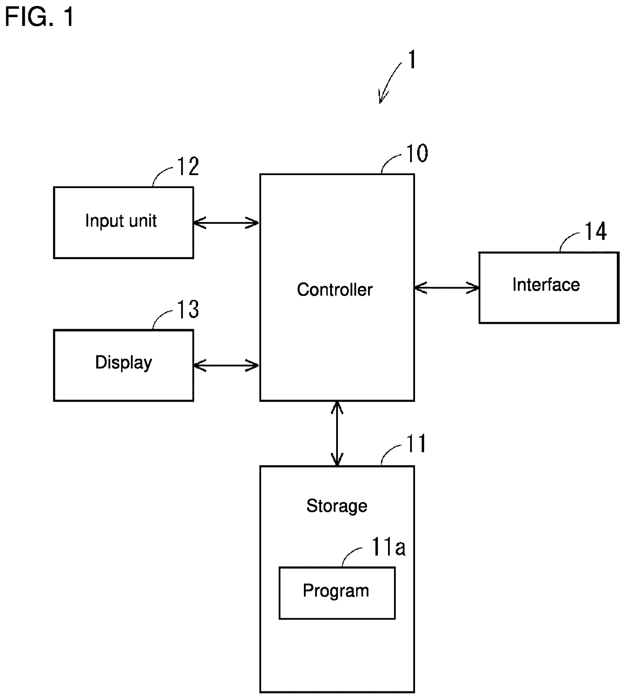

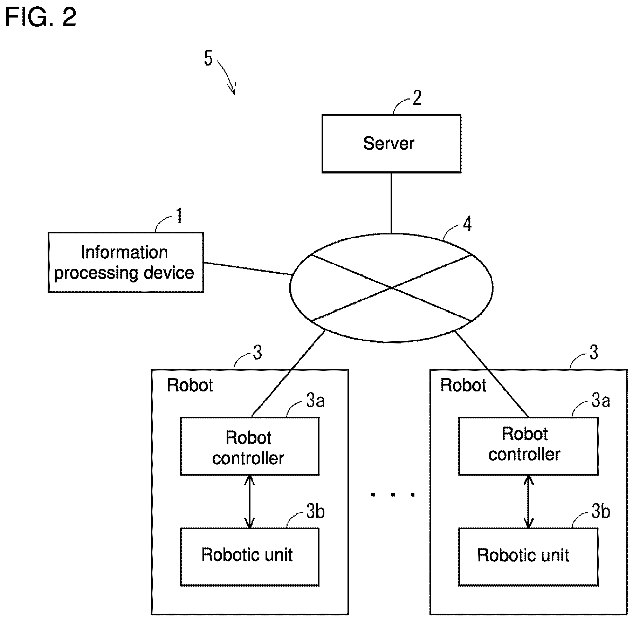

FIG. 1 is a block diagram of an information processing device 1 with an example structure. FIG. 2 is a block diagram of a robotic system 5 including the information processing device 1 with an example structure. As illustrated in FIG. 2, the robotic system 5 includes, for example, multiple robots 3, a server 2, and the information processing device 1. The multiple robots 3, the server 2, and the information processing device 1 are connected to a network 4 including, for example, the Internet.

Each of the multiple robots 3 includes, for example, a robotic unit 3b and a robot controller 3a for controlling the robotic unit 3b. The robot controller 3a is, for example, a computer. The robot controller 3a in each of the robots 3 is connected to the network 4. The server 2 and the robot controller 3a in each of the robots 3 can communicate with each other through the network 4. The server 2 and the information processing device 1 can also communicate with each other through the network 4. Note that the information processing device 1 and the robot controller 3a in each of the robots 3 may communicate with each other through the network 4.

The robotic system 5 may include multiple information processing devices 1. The multiple information processing devices 1 may communicate with the same robot 3 among the multiple robots 3. The multiple information processing devices 1 may also output a control command to the robot 3. This allows a user to instruct a specific robot 3 to perform a task using an information processing device 1 while allowing another user to schedule the specific robot 3 to perform the next task using another information processing device 1.

The robotic unit 3b in each of the multiple robots 3 may be, for example, a robotic arm unit or an automated guided vehicle (AGV). The multiple robotic units 3b may be, for example, of different types or of the same type. The multiple robotic units 3b may be, for example, different types of robotic arm units with different numbers of joints (in other words, the number of axes). The multiple robotic units 3b may be, for example, robotic arm units with one arm or two arms. The multiple robots 3 may be manufactured by different manufacturers, may be different products, or may be of different versions for the capabilities or specifications. The information processing device 1 may display information for identifying each of the multiple robots 3. The information may be included in robot-related information (described later).

The multiple robots 3 may be, for example, cooperative robots that can operate in cooperation with humans. Note that the cooperative robots refer to, for example, robots that satisfy specific safety standards and can operate without physical safety fences. Each of the multiple robots 3 may be carried and transferred by a user such as an instructor who provides task instructions to the multiple robots 3 or an operator who performs operations in cooperation with the multiple robots 3. Each of the multiple robots 3 may be attached to a support supporting the robot 3 and including a movement unit such as wheels, allowing the robot 3 to be transferred when the movement unit moves.

The robot 3 including a robotic unit 3b that is a robotic arm unit may hereafter be referred to as a robotic arm 3. The robot 3 including a robotic unit 3b that is an AGV may hereafter be referred to as an AGV robot 3. The robot 3 including a robotic unit 3b that is a robotic arm unit with one arm may hereafter be referred to as a single-arm robot 3. The robot 3 including a robotic unit 3b that is a robotic arm unit with two arms may hereafter be referred to as a dual-arm robot 3.

The server 2 manages the overall operation of the robotic system 5. The server 2 may be, for example, a computer. The server 2 is, for example, a cloud server. The server 2 may include a single computer or multiple computers.

The server 2 obtains, stores, and manages various items of information. The information stored in the server 2 includes a program (in other words, software). The server 2 stores, for example, robot-related information about each of the robots 3. The robot-related information (also referred to as registered robot-related information) stored in the server 2 includes, for example, multiple pieces of robot identification information for identifying the respective robots 3. Each of the multiple pieces of robot identification information includes, for example, the name of the robot 3, the model of the robot 3, a figure schematically indicating the appearance of the robot 3, and information indicating the type of the robot 3. The registered robot-related information includes, for example, robot capability information indicating the capabilities of the robot 3 and robot status information indicating the status of the robot 3. The robot capability information includes, for example, identification information for identifying the software installed in each of the robot controllers 3a in the robots 3 and information indicating the hardware configuration of the robots 3. The robot capability information may include, for example, the version information of each of the software or the hardware. The robot status information includes, for example, information indicating the communication connection status of the robot controller 3a to the server 2 and the operating status of the robot 3.

Note that the server 2 may also manage past information. The information managed by the server 2 may be traceable to the past information in an event of an incident. The information managed by the server 2 may be encrypted. The server 2 may regularly conduct a risk assessment or a vulnerability assessment of the information managed by the server 2. The server 2 can thus selectively provide an alert to a user of a robot 3 with risk or vulnerability through the information processing device 1. The server 2 can also uniformly provide an alert to possessors of the robots 3 about the risk or the vulnerability through the information processing device 1.

The server 2 also stores, for example, task-related information about tasks performed by the robots 3. The server 2 stores, for example, task-related information for each of the tasks. The task-related information stored in the server 2 (also referred to as registered task-related information) includes, for example, task information indicating the details of the corresponding task. The task information may include, for example, the name of the task and the overview of the task. The registered task-related information includes, for example, task status information indicating the status of the task performed by the robot 3 and task result information indicating the results of the task performed by the robot 3. The server 2 also stores various types of software (in other words, programs) used to perform tasks with the robots 3. Information stored in the server 2 is not limited to this example.

The robot controller 3a in each of the robots 3 obtains, from the server 2, information such as the task information used to perform tasks. The robot controller 3a then controls, for example, the robotic unit 3b based on the information obtained from the server 2. This causes the robot 3 to perform the task in the instruction provided by the server 2. The robotic arm 3 can detect a target object among multiple objects placed at predetermined positions, and hold and move the detected object to another position. The robot controller 3a in each of the robots 3 generates, for example, the task status information, the task result information, and the robot status information and transmits the generated information to the server 2. The server 2 stores and registers the various items of information received from each of the robots 3.

Note that the information used to perform a task with each of the robots 3 may include information of the software or the program for defining the motion of each of the robots 3 generated based on, for example, any one of the multiple robots 3. More specifically, the information generated based on any one of the multiple robots 3 may be generated with any one of the multiple robots 3, with teaching of any one of the multiple robots 3, or with simulation based on information about any one of the multiple robots 3. One item of task information may be generated based on any one of the multiple robots 3. The generated task information may be used to perform a task with at least one robot 3 different from the robot 3 used to generate the task information.

The robotic system 5 applies, for example, a multi-tenant system in which resources provided by the server 2 are shared by multiple tenants. A tenant may be, for example, an organization such as a corporation or a factory or a business office of a corporation. A single tenant includes multiple users. A tenant can also be referred to as a user group. The server 2 registers multiple tenants that use the resources provided by the server 2. The server 2 also registers the users included in the respective tenants.

The server 2 includes databases storing various items of information. The database includes, for example, a common database common to the multiple tenants and individual databases prepared for each of the multiple tenants. The databases include multiple individual databases corresponding to the respective tenants.

The common database stores information that can be used in common by the multiple tenants. The common database stores, for example, software used to perform tasks with the robot 3 (also referred to as task software). Examples of the task software include software for allowing the robot 3 to detect the position of an object to be held by the robot 3, software for allowing the robot 3 to detect an object being held by the robot 3, and software for allowing the robot 3 to detect the position to which an object being held by the robot 3 is to be placed. Each of the individual databases stores information usable by the corresponding tenant. In the server 2, information stored in an individual database corresponding to one tenant cannot be used by another tenant.

The information stored in the common database may hereafter be referred to as registered common information. The information stored in the individual databases may be referred to as registered tenant-specific information. A user included in a tenant can use the registered tenant-specific information corresponding to the tenant. This user cannot use the registered tenant-specific information corresponding to another tenant.

The registered tenant-specific information includes, for example, the registered robot-related information about each of the robots owned, possessed, or managed by a tenant that can use the registered tenant-specific information and the registered task-related information about each of the tasks performed by the respective robots. The registered tenant-specific information also includes, for example, software used to perform a task with the robot managed by a tenant (specifically, the task software) that uses the registered tenant-specific information.

The information processing device 1 can receive an input from the user and perform processing based on the received input. The information processing device 1 is, for example, a computer. The information processing device 1 may be, for example, a desktop or a laptop personal computer, a tablet terminal, a mobile phone such as a smartphone, or any other device.

### Example Structure of Information Processing Device

As illustrated in FIG. 1, the information processing device 1 includes, for example, a controller 10, a storage 11, an input unit 12, a display 13, and an interface 14.

The interface 14 can communicate with the network 4 based on, for example, a communication standard such as Wi-Fi. The interface 14 may be, for example, an interface circuit. The interface 14 may be, for example, a communication unit or a communication circuit. The interface 14 may be wired or wirelessly connected to the network 4. The interface 14 inputs information received from the network 4 into the controller 10. The interface 14 also outputs information from the controller 10 to the network 4.

The controller 10 can control other components of the information processing device 1 to centrally manage the operation of the information processing device 1. The controller 10 may be, for example, a control circuit. The controller 10 includes at least one processor that performs control and processing for implementing various functions, as described in more detail below.

In various embodiments, at least one processor may be implemented as a single integrated circuit (IC), or multiple ICs connected to one another for mutual communication or discrete circuits, or both. At least one processor may be implemented using various known techniques.

In one embodiment, the processor includes one or more circuits or units configured to perform one or more data computation procedures or processes by, for example, executing instructions stored in an associated memory. In another embodiment, the processor may be firmware (e.g., a discrete logic component) configured to perform one or more data computation procedures or processes.

In various embodiments, the processor may include one or more processors, controllers, microprocessors, microcontrollers, application-specific integrated circuits (ASICs), digital signal processors, programmable logic devices, field programmable gate arrays, combinations of any of these devices or configurations, or combinations of other known devices and configurations to implement the functions described below.

The controller 10 may include, for example, a central processing unit (CPU) as the processor. The storage 11 may include a non-transitory recording medium readable by the CPU in the controller 10, such as a read-only memory (ROM) and a random-access memory (RAM). The storage 11 stores, for example, multiple different programs 11a for controlling the information processing device 1. The various functions of the controller 10 are implemented by, for example, the CPU in the controller 10 executing the programs 11a in the storage 11. The multiple different programs 11a include, for example, a graphical user interface (GUI) program 11a.

Note that the controller 10 may have any structure other than the above example structure. For example, the controller 10 may include multiple CPUs. The controller 10 may also include at least one digital signal processor (DSP). The functions of the controller 10 may be implemented entirely or partially by a hardware circuit, without using software to implement the functions. The storage 11 may also include a non-transitory computer-readable recording medium other than the ROM and the RAM. The storage 11 may include, for example, a small hard disk drive and a solid-state drive (SSD).

The input unit 12 can receive various inputs from a user. The input unit 12 may include, for example, a mouse and a keyboard. The input unit 12 may include a touch sensor to receive touch operations performed by the user. The input unit 12 may include a microphone to receive a voice input from the user. The controller 10 detects a user input received by the input unit 12 based on an output signal from the input unit 12.

The display 13 can display various items of information under control of the controller 10. The display 13 includes a display surface on which various items of information are displayed. The display 13 may be, for example, a liquid crystal display, an organic electroluminescent (EL) display, or a plasma display panel. When the input unit 12 includes the touch sensor, the touch sensor and the display 13 may together serve as a touchscreen display that performs display and senses touches. In this case, the input unit 12 can sense touch operations on a display surface of the display 13. The input unit 12 and the display 13 together serve as a user interface. The display surface hereafter indicates the display surface of the display 13.

Note that the server 2 may have the same structure as or a similar structure to the information processing device 1. The robot controller 3a may also have the same structure as or a similar structure to the information processing device 1.

### Example Operation of Robotic System

The information processing device 1 can receive, from the user, designation of the robot 3 to be a transmission destination of the task information (also referred to as a transmission destination robot 3), for example. The information processing device 1 can receive designation of a single transmission destination robot 3 or multiple transmission destination robots 3 from the user. The information processing device 1 provides the server 2 with information indicating at least one transmission destination robot 3 designated by the user. The server 2 transmits the task information to the at least one transmission destination robot 3 informed by the information processing device 1. The robot controller 3a in the robot 3 receiving the task information controls the robotic unit 3b based on the task information to perform the task associated with the task information (specifically, the task indicated by the task information).

The information processing device 1 can generate task details based on the user input. The user performs an input into the information processing device 1 to cause the information processing device 1 to generate intended task details. In other words, the user generates intended task details using the information processing device 1. The information processing device 1 transmits the task information indicating the generated task details to the server 2. The server 2 stores and manages the task information received from the information processing device 1.

Operation examples of the robotic system 5 will be described in detail below, focusing on the operation of the information processing device 1.

The information processing device 1 displays, on its display surface, an icon for executing a predetermined application program 11a in the storage 11. The controller 10 executing the predetermined application program 11a allows the information processing device 1 to receive designation of the transmission destination robot 3 from the user and generate task information based on the user input.

In response to the user selecting a predetermined icon displayed on the display surface, or more specifically, in response to the input unit 12 receiving a selection input for selecting the predetermined icon, the controller 10 starts execution of the predetermined application program 11a in the storage 11. The selection input for selecting a target such as an icon displayed on the display surface may be a touch operation on the target or a predetermined operation using a mouse with a pointer located on the target.

When the controller 10 starts execution of the predetermined application program 11a, the controller 10 causes the display 13 to display an input screen 20 on which the user inputs, into the information processing device 1, tenant identification information for identifying the tenant.

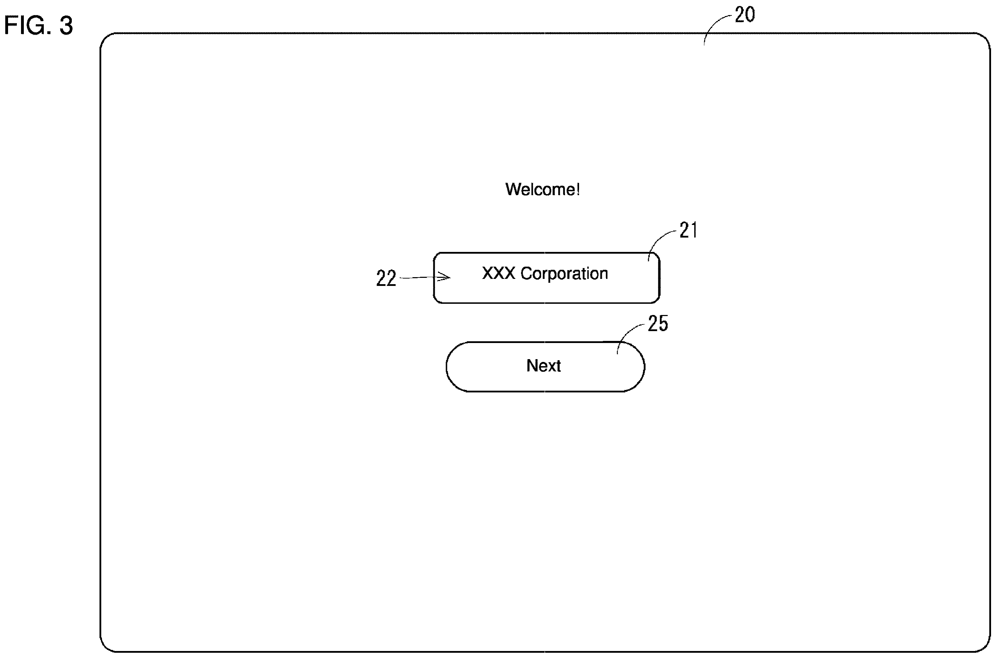

FIG. 3 is a schematic diagram of an example input screen 20. As illustrated in FIG. 3, the input screen 20 includes, for example, an input area 21 for inputting tenant identification information 22 and an instruction area 25 for providing an instruction to display the next screen. After selecting the input area 21, or more specifically, after performing a selection input for selecting the input area 21 into the input unit 12, the user can input the tenant identification information 22 into the information processing device 1. When the user inputs the tenant identification information 22 of the tenant including the user into the input unit 12, the input area 21 indicates the tenant identification information 22 that has been input (also referred to as input tenant identification information 22). In the example in FIG. 3, a company name is displayed as the input tenant identification information 22. Note that the input tenant identification information 22 may be, for example, a numerical value or a string of characters indicating the tenant.

After inputting the tenant identification information 22 into the input unit 12, the user performs a selection input for selecting the instruction area 25 into the input unit 12. When the instruction area 25 is selected and the tenant identified with the input tenant identification information 22 is a tenant registered with the server 2, a sign-in screen 30 for using the resources provided by the server 2 appears on the display 13.

The information processing device 1 inquires of the server 2 as to whether the tenant identified with the input tenant identification information 22 is registered with the server 2. In this case, the information processing device 1 provides the server 2 with the input tenant identification information 22. The server 2 determines whether the tenant identified with the input tenant identification information 22 is registered, and provides the information processing device 1 with the determination result. When the information processing device 1 receives the determination result provided by the server 2, the controller 10 causes the display 13 to display the sign-in screen 30 for the tenant identified with the input tenant identification information 22 registered with the server 2. The controller 10 does not cause the display 13 to display the sign-in screen 30 for the tenant identified with the input tenant identification information 22 not registered with the server 2. In this case, the controller 10 may cause the display 13 to display information indicating that the tenant identified with the input tenant identification information 22 is not registered.

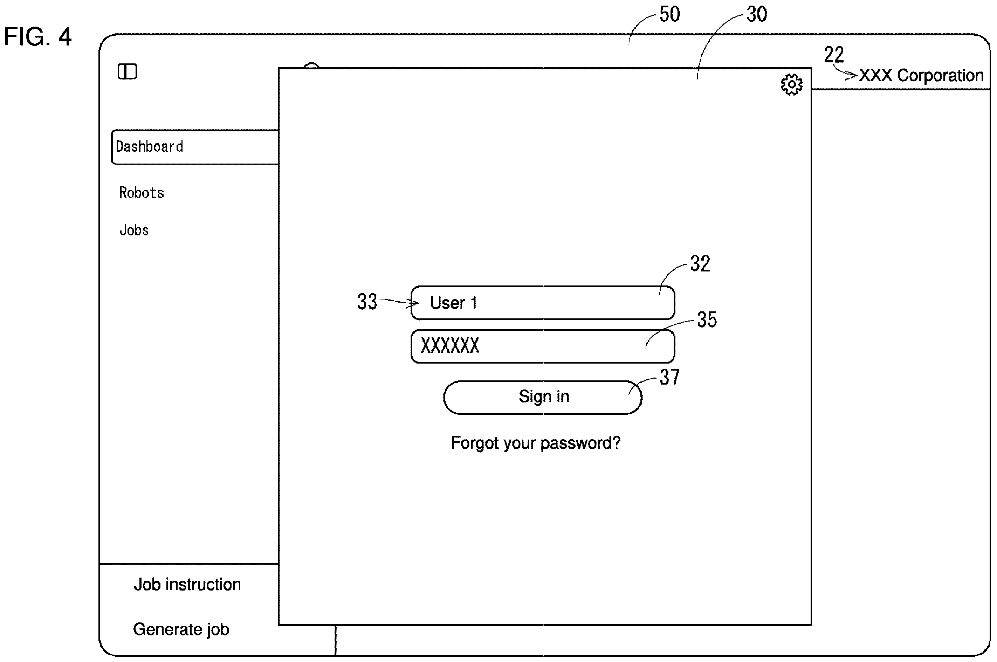

FIG. 4 is a schematic diagram of an example sign-in screen 30. The sign-in screen 30 is, for example, superimposed on a main screen 50 (described later) that is to be displayed on the display 13 after a successful sign-in. Before signing in, the main screen 50 includes no information based on information registered with the server 2.

The sign-in screen 30 includes, for example, an input area 32 for inputting user identification information 33 for identifying the user and an input area 35 for inputting a password for signing in. The sign-in screen 30 also includes an instruction area 37 for providing an instruction to sign in. Note that a passkey may be used in place of the password for signing in.

After performing a selection input for selecting the input area 32 into the input unit 12, the user can input the user identification information 33 into the information processing device 1. When the user inputs the user identification information 33 assigned to the user into the input unit 12, the input area 32 indicates the user identification information 33 that has been input (also referred to as input user identification information 33).

After performing a selection input for selecting the input area 35 into the input unit 12, the user can input a password into the information processing device 1. When the user inputs a password corresponding to the input user identification information 33 into the input unit 12, the input area 35 indicates, for example, the password that has been input (also referred to as an input password).

After inputting the user identification information 33 and the password into the input unit 12, the user performs a selection input for selecting the instruction area 37 into the input unit 12. The user thus provides an instruction to the information processing device 1 for allowing the user to sign in.

The information processing device 1 receiving the sign-in instruction provides the server 2 with the input user identification information 33 and the input password. The server 2 determines whether the user identified with the provided input user identification information 33 (also referred to as an identified user) is registered. When the identified user is registered, the server 2 determines whether the input password is the password corresponding to the identified user. When the input password is the password corresponding to the identified user, the server 2 determines that the user using the information processing device 1 has permission to use the resources provided by the server 2, and provides the information processing device 1 with information indicating that the sign-in has been successful. When the identified user is not registered, the server 2 determines that the sign-in has failed. When the identified user is registered but the input password is not the password corresponding to the identified user, the server 2 determines that the sign-in has failed. When determining that the sign-in has failed, the server 2 provides the information processing device 1 with information indicating that the sign-in has failed.

Upon receiving information indicating that the sign-in has been successful, the controller 10 in the information processing device 1 causes the display 13 to display the main screen 50. The user who has successfully signed in (also referred to as a signed-in user) can use the registered tenant-specific information managed by the server 2 and corresponding to the tenant including the user. The signed-in user can also use information stored in the common database in the server 2. Upon receiving information indicating that the sign-in has failed, the controller 10 in the information processing device 1 does not cause the display 13 to display the main screen 50. In this case, the controller 10 may cause the display 13 to display that the sign-in has failed. Note that the controller 10 may also filter the registered tenant-specific information about the tenant including the signed-in user as appropriate for the signed-in user and cause the display 13 to display the filtered registered tenant-specific information. More specifically, the controller 10 can select information to be displayed on the display 13 based on viewing permission individually assigned to each of the users.

Unless otherwise specified, the user hereafter refers to a user who has successfully signed in (specifically, the signed-in user). The tenant including the signed-in user may be referred to as a target tenant. An individual database stored in the server 2 and corresponding to a target tenant may be referred to as a target individual database. Registered tenant-specific information stored in the target individual database may be referred to as target registered tenant-specific information.

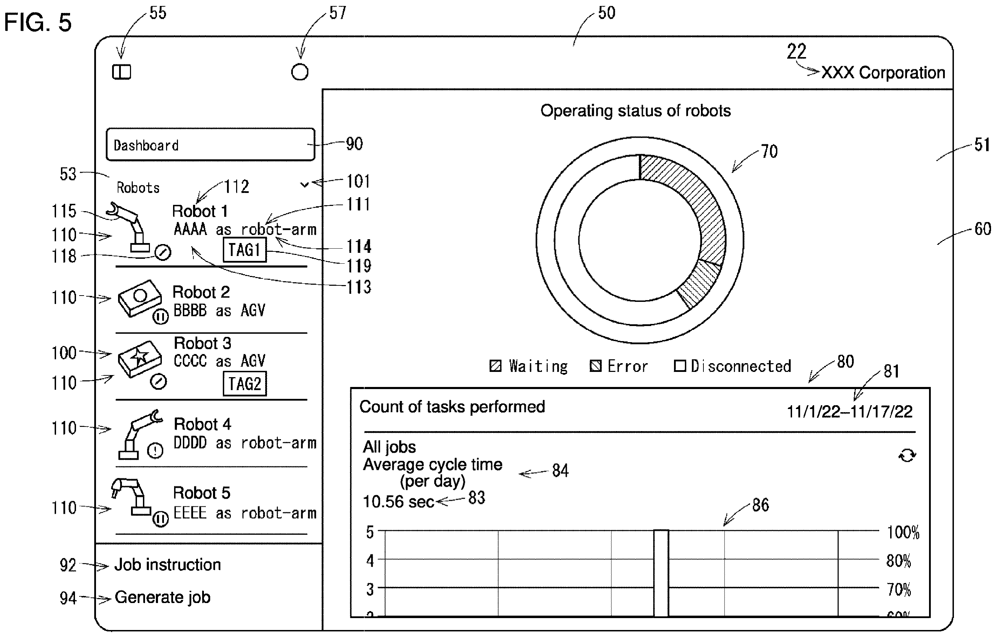

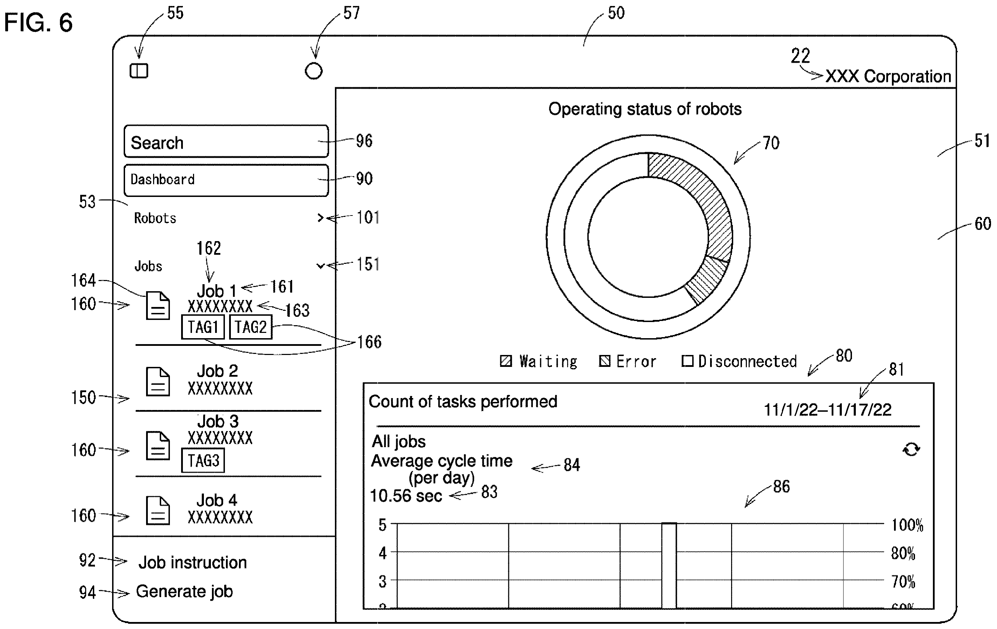

FIGs. 5 and 6 are each a schematic diagram of an example main screen 50. The information processing device 1 can generate the main screen 50 based on at least a part of the target registered tenant-specific information obtained from the server 2 and cause the generated main screen 50 to be displayed. The information processing device 1 can also cause various screens (described later) other than the main screen 50 to be displayed based on at least a part of the target registered tenant-specific information or at least a part of the target registered tenant-specific information and at least a part of the registered common information stored in the server 2.

The main screen 50 includes, for example, a right screen 51 displayed on the right and a left screen 53 displayed on the left. The main screen 50 also includes instruction areas 55 and 57 located in its upper portion. The main screen 40 also includes the tenant identification information 22. The user can perform a predetermined input into the input unit 12 to cause the information processing device 1 to scroll the right screen 51. The user can also perform a predetermined input into the input unit 12 to cause the information processing device 1 to scroll the left screen 53. FIG. 6 illustrates the state of the main screen 50 illustrated in FIG. 5 after the left screen 53 is scrolled. Note that a screen or information displayed on the display 13 is scrolled as appropriate in response to a user input into the input unit 12, although not described in detail below.

The right screen 51 is, for example, a dashboard 60. The dashboard 60 includes a status chart 70 showing the status of multiple robots 3 managed by a target tenant, and a task result screen 80 indicating the results of tasks performed by the multiple robots 3 managed by the target tenant. The dashboard 60 will be described in detail later. Note that the right screen 51 may display a screen other than the dashboard 60, as described later. The multiple robots 3 owned, possessed, or managed by the target tenant may each hereafter be referred to as a target robot 3.

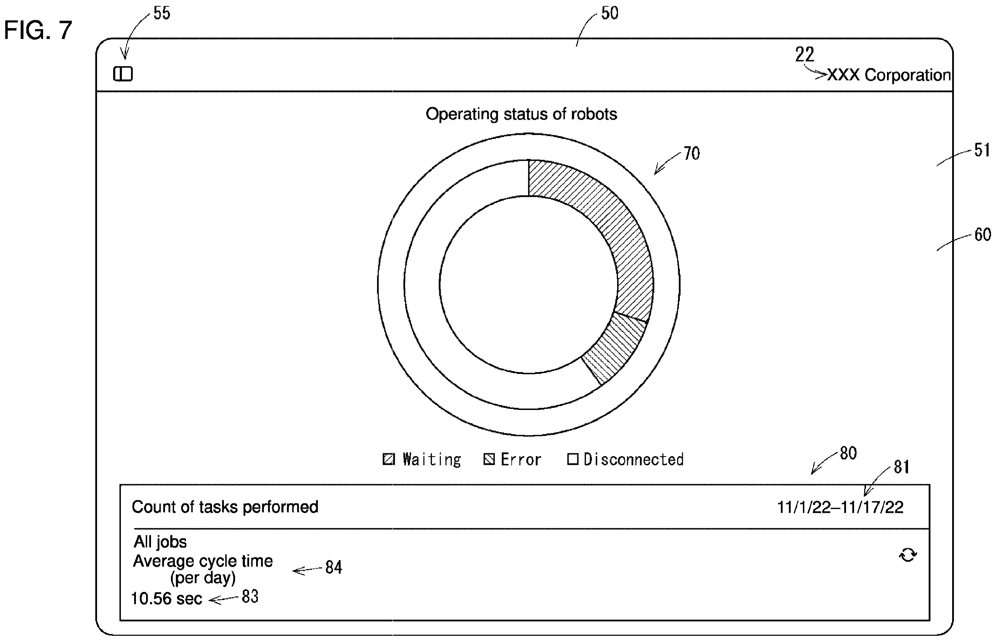

The instruction area 55 is an area for providing an instruction to switch between displaying and hiding the left screen 53. When the instruction area 55 is selected with the left screen 53 displayed as illustrated in FIGs. 5 and 6, the left screen 53 is hidden and the right screen 51 appears in a large portion of the main screen 50 as illustrated in FIG. 7. When the instruction area 55 is selected again, the left screen 53 appears as illustrated in FIGs. 5 and 6.

The instruction area 57 is an area for providing an instruction to display a setting screen for account setting. When the instruction area 57 is selected, for example, the setting screen appears on the main screen 50.

The left screen 53 includes, for example, an instruction area 90 for providing an instruction to display the dashboard 60. When the instruction area 90 is selected without the dashboard 60 displayed on the right screen 51, the dashboard 60 appears on the right screen 51.

The left screen 53 also includes instruction areas 92 and 94. The instruction area 92 is an area for providing an instruction to start processing for providing an instruction to the robot 3 to perform a task. The instruction area 94 is an area for providing an instruction to start processing for generating task details. The operation of the information processing device 1 after the instruction area 92 is selected will be described in detail later. The operation of the information processing device 1 after the instruction area 94 is selected will also be described in detail later.

As illustrated in FIG. 5, the left screen 53 displays, for example, a robot list 100 listing multiple target robots 3 managed by the target tenant. The left screen 53 also includes an instruction area 101 for providing an instruction to switch between displaying and hiding the robot list 100. As illustrated in FIG. 5, when the instruction area 101 is selected with the robot list 100 displayed on the left screen 53, the robot list 100 is hidden (refer to FIG. 6). When the instruction area 101 is selected again, the robot list 100 appears as illustrated in FIG. 5.

The robot list 100 includes multiple pieces of robot-related information 110 about the respective target robots 3. Each of the multiple pieces of robot-related information 110 includes, for example, robot identification information 111 for identifying the corresponding target robot 3 and a status symbol 118 indicating the status of the target robot 3. The robot-related information 110 may include at least one tag 119 assigned to the target robot 3. The tag 119 indicates, for example, a string of characters and is information for facilitating a search for intended robot-related information 110 from the robot list 100. The status symbol 118 is information indicating the communication connection status or the operating status of the target robot 3. Note that the robot-related information 110 about some of the target robots 3 may be hidden or the display order of the pieces of robot-related information 110 may be changed on the robot list 100 based on each piece of information included in the robot-related information 110.

The robot identification information 111 includes, for example, a name 112 of the target robot 3, a model 113 of the target robot 3, information 114 indicating the type of the target robot 3, and an image 115 schematically illustrating the appearance of the target robot 3.

In this example, for example, the status symbols 118 include eight types of status symbols 118a to 118h. Each of the multiple pieces of robot-related information 110 includes one of the eight types of status symbols 118a to 118h.

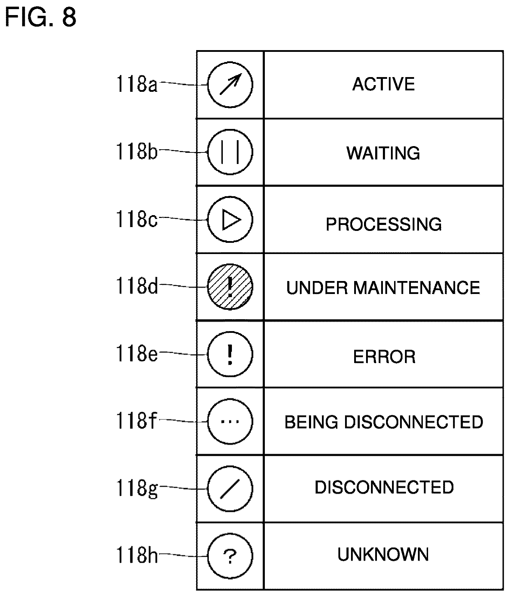

FIG. 8 is a schematic diagram of the eight types of example status symbols 118a to 118h. The status symbol 118a indicates that the target robot 3 can communicate with the server 2 and is active. The robot 3 being active hereafter refers to the robot 3 that can communicate with the server 2 and is active. An instruction for the target robot 3 being active to perform a task may be stored into the server 2 as an instruction for the target robot 3 to perform the task after activation. Note that the target robot 3 in this case may not receive an instruction to perform a task.

The status symbol 118b indicates that the target robot 3 can communicate with the server 2 and is on standby. The robot 3 on standby hereafter refers to the robot 3 that can communicate with the server 2 and is on standby. The target robot 3 on standby can perform a task in response to an instruction to perform the task.

The status symbol 118c indicates that the target robot 3 can communicate with the server 2 and is processing, or in other words, the target robot 3 is performing a task. The robot 3 that is processing hereafter refers to the robot 3 that can communicate with the server 2 and is processing.

The status symbol 118d indicates that the target robot 3 can communicate with the server 2 and is under maintenance. The robot 3 that is under maintenance hereafter refers to the robot 3 that can communicate with the server 2 and is under maintenance. Note that the target robot 3 under maintenance cannot receive, for example, an instruction to perform a task.

The status symbol 118e indicates that the target robot 3 can communicate with the server 2 and has an error. The robot 3 having an error hereafter refers to the robot 3 that can communicate with the server 2 and has an error. Note that the target robot 3 having an error cannot receive, for example, an instruction to perform a task.

The status symbol 118f indicates that the target robot 3 is being disconnected from the server 2. The robot 3 that is being disconnected hereafter refers to the robot 3 that can communicate with the server 2 and is being disconnected from the server 2. The target robot 3 being disconnected cannot receive an instruction to perform a task. Note that a task instruction for the target robot 3 may be stored into the server 2 although the target robot 3 cannot receive an instruction to perform a task.

The status symbol 118g indicates that the target robot 3 is disconnected from the server 2, or in other words, the target robot 3 cannot communicate with the server 2. The robot 3 disconnected hereafter refers to the robot 3 that cannot communicate with the server 2. The target robot 3 disconnected cannot receive an instruction to perform a task. Note that a task instruction for the target robot 3 disconnected may be stored into the server 2 as an instruction to perform the task after activation although the target robot 3 disconnected cannot receive an instruction to perform a task.

The status symbol 118h indicates that the target robot 3 can communicate with the server 2 but the status of the target robot 3 is unknown. The robot 3 in unknown status hereafter refers to the robot 3 that can communicate with the server 2 but is in unknown status.

The robot controller 3a that can communicate with the server 2 generates the robot status information indicating the status of the robot 3 and repeatedly transmits the information to the server 2. The robot status information generated by the robot controller 3a includes, for example, information indicating that the robot 3 is active, information indicating that the robot 3 is on standby, or information indicating that the robot 3 is processing. The robot status information generated by the robot controller 3a also includes information indicating that the robot 3 is under maintenance, information indicating that the robot 3 has an error, and information indicating that the robot 3 is being disconnected. The server 2 adds the robot status information transmitted from a robot 3 to the registered robot-related information about the corresponding robot 3 registered in the individual database.

When the server 2 cannot communicate with a robot 3, the server 2 adds the information indicating that the robot 3 is disconnected to the registered robot-related information about the corresponding robot 3. When the server 2 can communicate with a robot 3 in unknown status, the server 2 adds the information indicating that the status of the robot 3 is unknown to the registered robot-related information about the corresponding robot 3.

The server 2 may add, for example, positional information of the robot 3 obtained from a global positioning system (GPS) mounted on the robot 3 or prestored storage location information of the robot 3 to the registered robot-related information about the corresponding robot 3.

The information processing device 1 obtains, from the server 2, at least a part of the registered robot-related information about the target robot 3 stored in the target individual database in the server 2, and displays the robot-related information 110 based on the obtained information.

As illustrated in FIG. 6, the left screen 53 includes, for example, a task list 150 listing multiple tasks (more specifically, multiple types of tasks) to be performed by the target robot 3 based on an instruction. The left screen 53 also includes an instruction area 151 for providing an instruction to switch between displaying and hiding the task list 150. When the instruction area 151 is selected with the task list 150 displayed on the left screen 53 as illustrated in FIG. 6, the task list 150 is hidden. When the instruction area 151 is selected again, the task list 150 appears as illustrated in FIG. 6. Each of the tasks included in the task list 150 is, for example, a task associated with task information registered in the target individual database in the server 2. Note that the multiple tasks included in the task list 150 (in other words, multiple types of tasks) may include, for example, a task associated with task information registered in the individual database in the server 2 corresponding to a tenant other than the target tenant.

The task list 150 includes multiple pieces of task-related information 160 about the respective tasks. Each of the multiple pieces of task-related information 160 includes, for example, task identification information 161 for identifying each of the tasks. The task-related information 160 may also include at least one tag 166 assigned to the corresponding task. The tag 166 indicates, for example, a string of characters and is information for facilitating a search for intended task-related information 160 from the task list 150. Each of the multiple pieces of task identification information 161 includes, for example, a name 162 of the task, an overview 163 of the task, and an image 164 of the task. The task list 150 may include, for example, information indicating targets of the tasks. The overview 163 of the task may be, for example, information indicating the storage location of a video recorded during the task and stored in the server 2. Images and videos of the tasks may be viewed on the right screen 51. Note that some pieces of the task-related information 160 on the task list 150 may be hidden or the display order of the pieces of task-related information 160 may be changed based on each piece of information included in the task-related information 160.

As illustrated in FIG. 6, the left screen 53 includes a search field 96 for inputting a keyword to search for the robot-related information 110 and the task-related information 160 from the robot list 100 and the task list 150. After performing a selection input for selecting the search field 96 into the input unit 12, the user can input a keyword into the information processing device 1. When the user inputs a keyword into the input unit 12, the input keyword appears in the search field 96. The controller 10 in the information processing device 1 searches the robot list 100 and the task list 150 for the robot-related information 110 and the task-related information 160 including the input keyword. The controller 10 then causes the display 13 to hide or delete the robot-related information 110 and the task-related information 160 other than the robot-related information 110 and the task-related information 160 including the input keyword from the robot list 100 and the task list 150.

### Dashboard on Main Screen

The dashboard 60 includes the status chart 70, which is, for example, a doughnut chart. The status chart 70 shows, for example, the proportions of the numbers of target robots 3 in each status described with reference to FIG. 8 to the total number of target robots 3. In the example in FIGs. 5 to 7, the multiple target robots 3 managed by the target tenant include one or more target robots 3 disconnected, one or more target robots 3 having an error, and one or more target robots 3 on standby. The status chart 70 in each of FIGs. 5 to 7 thus shows the proportion of the target robots 3 disconnected (indicated as "Disconnected" in the figure), the proportion of the target robots 3 having an error (indicated as "Error" in the figure), and the proportion of the target robots 3 on standby (indicated as "Waiting" in the figure).

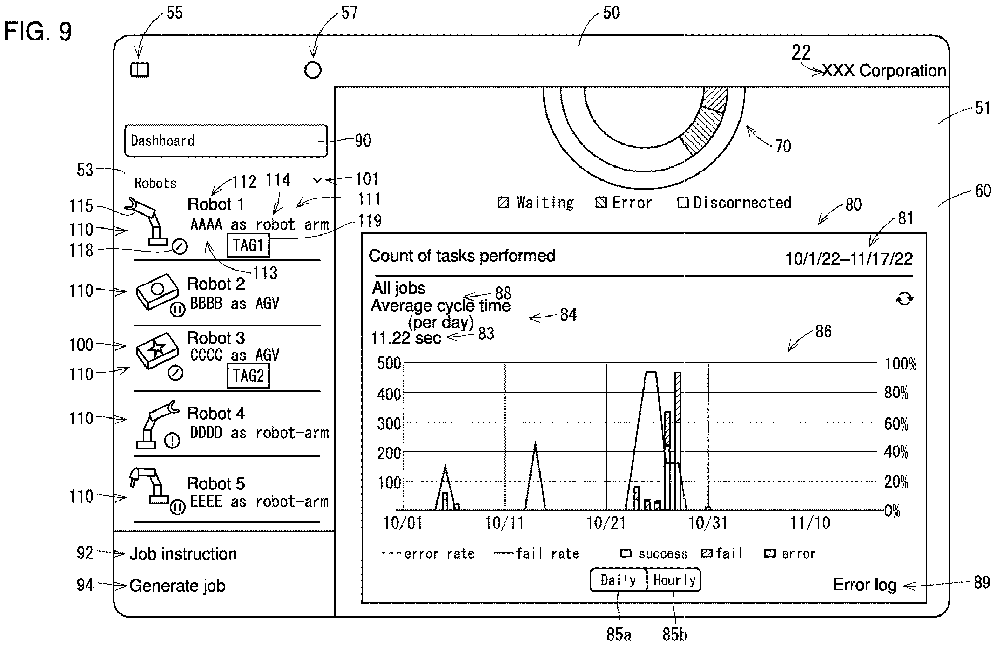

FIG. 9 is an overall schematic diagram of the task result screen 80 included in the dashboard 60. The task result screen 80 indicating the results of tasks performed by the multiple target robots 3 managed by the target tenant in a predetermined period includes an input area 81 for inputting a predetermined period. The user selects the input area 81 to input a predetermined period into the information processing device 1. When the user inputs a predetermined period into the input unit 12, the predetermined period that has been input (also referred to as an input predetermined period) appears in the input area 81. The task result screen 80 displays the results of tasks performed by the multiple target robots 3 managed by the target tenant in the input predetermined period. The input period may be a contract period of the target tenant.

Note that the data on the status chart 70 or the task result screen 80 may be data about, among the multiple target robots 3, the target robots 3 displayed on the robot list 100 on the left screen 53. The data on the status chart 70 or the task result screen 80 may be data about, among the multiple target robots 3, the target robots 3 that performed the tasks in the past or the target robots 3 that are currently performing the tasks displayed on the task list 150 on the left screen 53.

The task result screen 80 includes, for example, an instruction area 88 for providing an instruction to display a selection screen 120. The selection screen 120 is used to select whether to display the results of all the tasks performed by the multiple target robots 3 managed by the target tenant in the input predetermined period on the task result screen 80 or to display the results of a specific type of task performed by the multiple target robots 3 managed by the target tenant in the input predetermined period on the task result screen 80. When the user selects the instruction area 88, the selection screen 120 appears on the display 13.

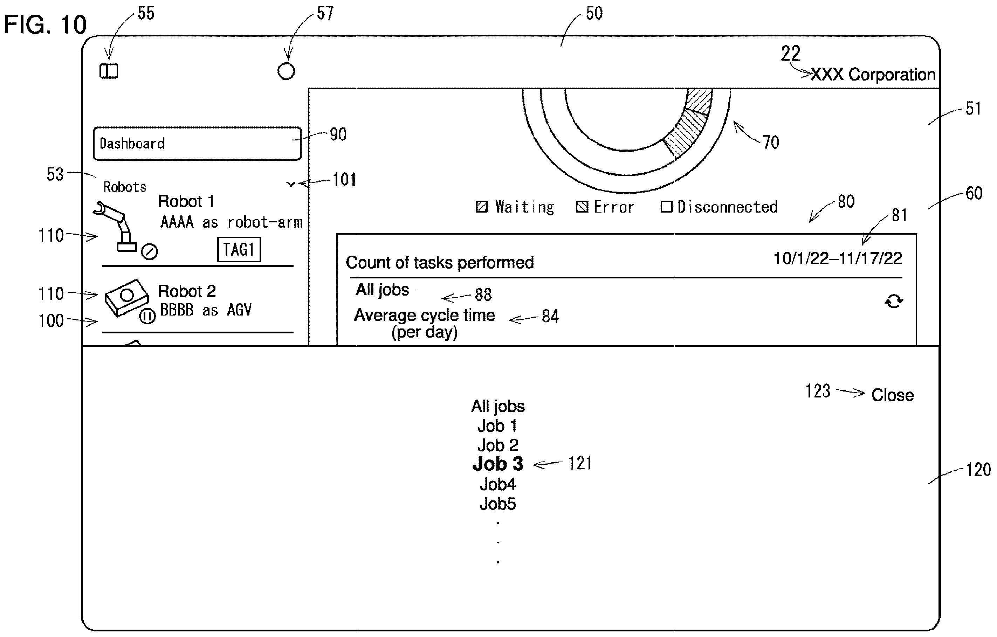

FIG. 10 is a schematic diagram of an example selection screen 120. The selection screen 120 is, for example, displayed on the task result screen 80. The selection screen 120 includes a selection area 121 for selecting a task for which the result is to be displayed on the task result screen 80. The selection area 121 is, for example, in a spinner format. The user can operate the selection area 121 with, for example, the finger or the cursor to select a task for which the result is to be displayed on the task result screen 80. The user can operate the selection area 121 to select whether to display the results of all the tasks performed by the multiple target robots 3 managed by the target tenant in the input predetermined period or to display the results of a specific type of task performed by the multiple target robots 3 managed by the target tenant in the input predetermined period on the task result screen 80.

The selection screen 120 includes an instruction area 123 for providing an instruction to hide the selection screen 120. When the instruction area 123 is selected, the display 13 hides the selection screen 120.

Note that the task result screen 80 may include, in place of the instruction area 88, a pop-up menu for selecting whether to display all the results of the tasks performed by the multiple target robots 3 managed by the target tenant in the input predetermined period on the task result screen 80 or to display the results of a specific type of task performed by the multiple target robots 3 managed by the target tenant in the input predetermined period on the task result screen 80. In this case, the selection screen 120 is not displayed.

The task result screen 80 displays task duration information 83 for all the multiple target robots 3 managed by the target tenant. The task duration information 83 may be, for example, an average cycle time 83. The average cycle time refers to the average task duration taken for successfully performing one task. The average cycle time is also referred to as a takt time. The task result screen 80 may display the average cycle time 83 per day or the average cycle time 83 per hour. The task result screen 80 includes an instruction area 85a for providing an instruction to display the average cycle time 83 per day, and an instruction area 85b for providing an instruction to display the average cycle time 83 per hour. As illustrated in the example in FIG. 9, when the instruction area 85b is selected with the average cycle time 83 per day displayed on the task result screen 80, the average cycle time 83 per hour appears on the task result screen 80. When the instruction area 85a is selected with the average cycle time 83 per hour displayed on the task result screen 80, the average cycle time 83 per day appears on the task result screen 80. When the task result screen 80 displays the results of all the tasks performed in the input predetermined period, the task result screen 80 displays the average cycle time 83 of all the tasks. When the task result screen 80 displays the result of a specific type of task performed in the input predetermined period, the task result screen 80 displays the average cycle time 83 for the specific type of task.

The task result screen 80 also includes information 84 indicating whether the average cycle time 83 displayed on the task result screen 80 is the average cycle time 83 per day or the average cycle time 83 per hour.

The task result screen 80 also displays a graph 86 showing the results of tasks performed in the input predetermined period. The graph 86 may be, for example, a biaxial graph 86. The biaxial graph 86 is a stacked bar graph showing the number of task errors (indicated as "error" in the figure), the number of task failures (indicated as "fail" in the figure), and the number of task successes (indicated as "success" in the figure). The number of task errors is the count of tasks with an error. A task has an error when the error causes the robot 3 to stop during the task, and the robot 3 cannot resume the task. The number of task failures is the count of tasks with a failure. A task has a failure when the robot 3 fails in a task but completes the next task. The number of task successes is the count of tasks performed successfully. The left axis of the biaxial graph 86 indicates the count of tasks.

The biaxial graph 86 includes a broken line graph showing the proportion of task errors (indicated as "error rate" in the figure), and a solid line graph showing the proportion of task failures (indicated as "fail rate" in the figure). The proportion of task errors refers to the number of task errors in the total count of tasks. The proportion of task failures refers to the number of task failures in the total count of tasks. The right axis of the biaxial graph 86 indicates the percentage.

Note that the number of task errors is zero in the input predetermined period in the example in FIG. 9. The broken line graph showing the proportion of task errors is thus not displayed. The stacked bar graph also does not show the number of task errors.

When the task result screen 80 displays the results of all the tasks performed in the input predetermined period, the biaxial graph 86 collectively shows the number of task errors, the number of task failures, the number of task successes, the proportion of task errors, and the proportion of task failures in all the tasks. When the task result screen 80 displays the results of a specific type of task performed in the input predetermined period, the biaxial graph 86 shows the number of task errors, the number of task failures, the number of task successes, the proportion of task errors, and the proportion of task failures in the specific type of task.

The task result screen 80 includes, for example, an instruction area 89 for providing an instruction to display an error log screen 890 indicating a list of errors. When the instruction area 89 is selected, the error log screen 890 appears on the display 13.

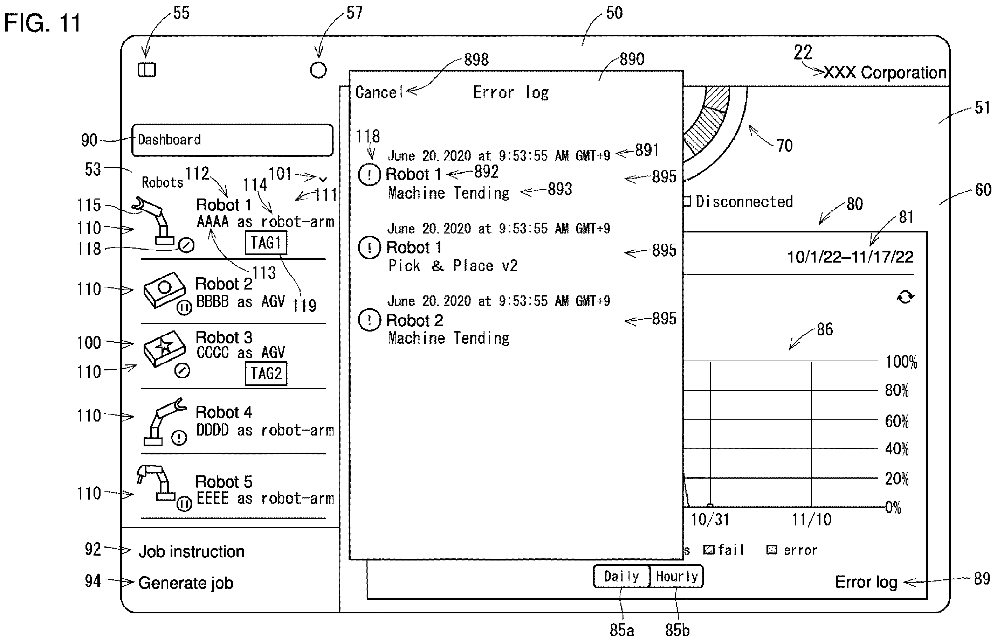

FIG. 11 is a schematic diagram of the error log screen 890 illustrating an example display. The error log screen 890 is, for example, displayed on the dashboard 60. The error log screen 890 includes, for example, multiple pieces of error information 895 about the respective errors. Each of the multiple pieces of error information 895 includes, for example, a date and time 891 at which an error occurs, a name 892 of the target robot 3 with the error, and a name 893 of the task with the error. When the error information 895 is selected, detailed information about the error appears on the display 13. The error log screen 890 includes an instruction area 898 for providing an instruction to hide the error log screen 890. When the instruction area 898 is selected, the display 13 hides the error log screen 890.

### Generation of Task Details

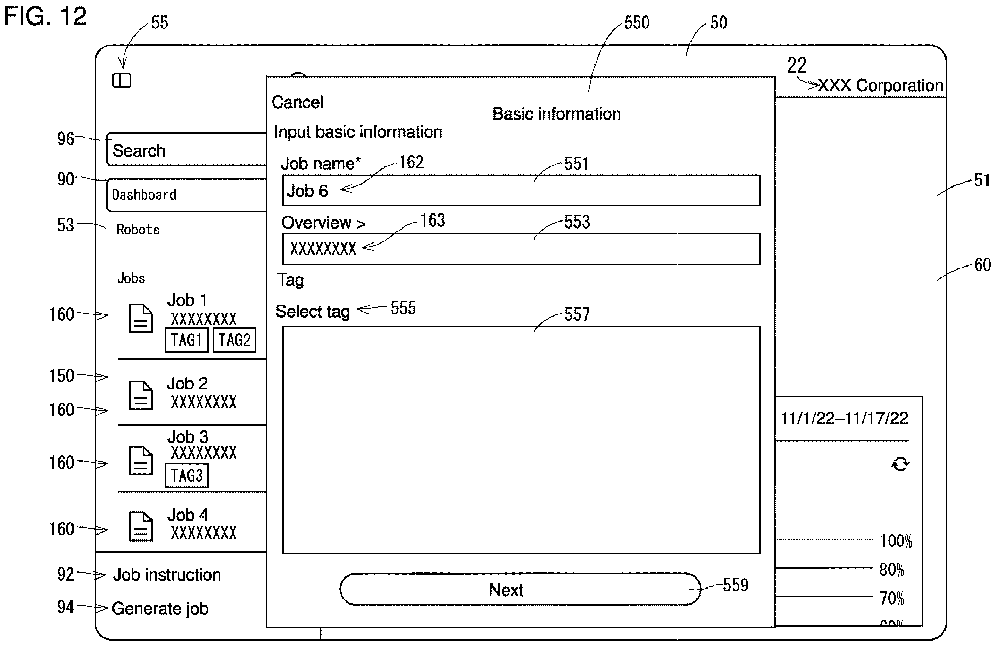

When the input unit 12 receives a selection input for selecting the instruction area 94, an input screen 550 for inputting information about a task for which the task details are to be generated appears on the display 13. FIG. 12 is a schematic diagram of an example of the input screen 550. The input screen 550 is, for example, displayed on the main screen 50.

The input screen 550 includes an input area 551 for inputting the name 162 of the task for which the task details are to be generated. After performing a selection input for selecting the input area 551 into the input unit 12, the user can input the name 162 into the information processing device 1. When the user inputs the name 162 into the input unit 12, the input name 162 appears in the input area 551.

The input screen 550 includes an input area 553 for inputting the overview 163 of the task for which the task details are to be generated. The user selects the input area 553 to input the overview 163 into the information processing device 1. When the user inputs the overview 163 into the input unit 12, the input overview 163 appears in the input area 553.

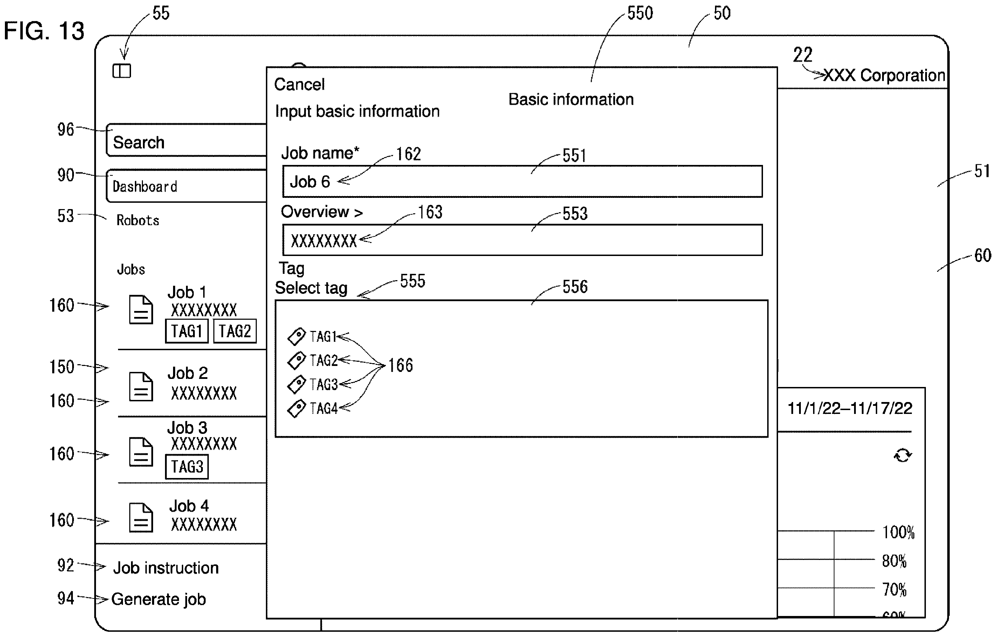

The input screen 550 includes an instruction area 555 for providing an instruction to display a selection screen 556 for selecting a tag 166 to be assigned to the task for which the task details are to be generated. When the instruction area 555 is selected, the selection screen 556 appears as illustrated in, for example, FIG. 13.

The selection screen 556 is, for example, displayed on the input screen 550. The selection screen 556 includes multiple tags 166. The user can select at least one tag 166 to be assigned to the task from the multiple tags 166 included in the selection screen 556. When the user performs a selection input for selecting the tag 166 included in the selection screen 556 into the input unit 12, the selected tag 166 is assigned to the task.

The input screen 550 includes an input area 557 for inputting a remark about the task for which the task details are to be generated. The user selects the input area 557 to input a remark into the information processing device 1. When the user inputs a remark into the input unit 12, the input remark appears in the input area 557.

The input screen 550 includes, for example, an instruction area 559 for providing an instruction to display the next screen. When the user inputs information such as the name 162 of the task for which the task details are to be generated and selects the instruction area 559, a generation screen 170 for generating the task details appears on the display 13. Note that the input screen 550 and the generation screen 170 may be switchable with a tab.

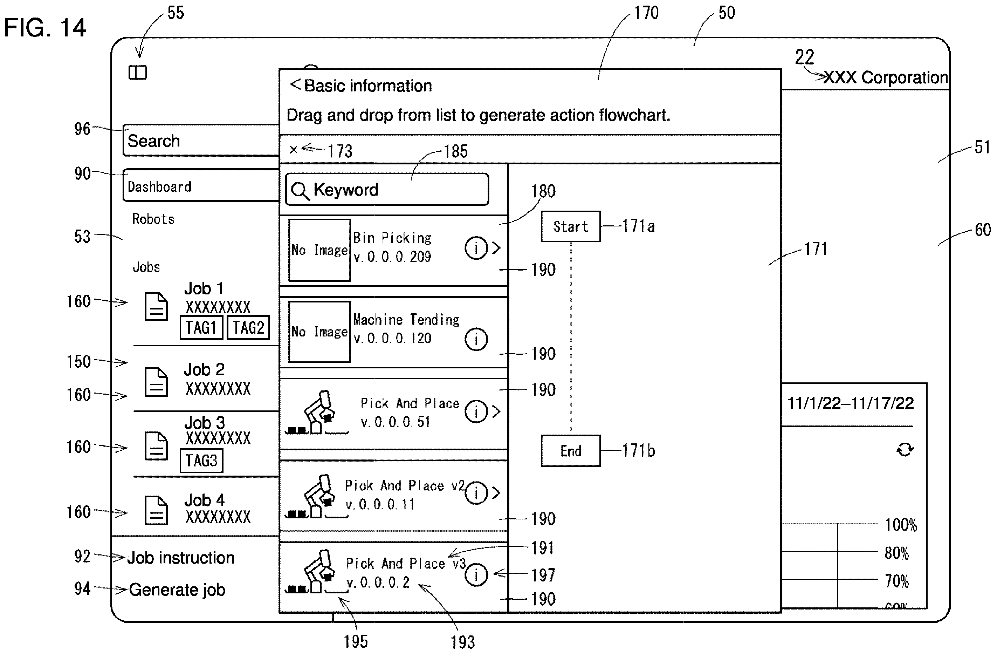

FIG. 14 is a schematic diagram of an example of the generation screen 170. The generation screen 170 is, for example, displayed on the main screen 50. In this example, the task includes a single basic process or a combination of multiple basic processes. In other words, the task details are indicated with a single basic process or a combination of multiple basic processes. The server 2 includes multiple basic processes registered. The server 2 includes a database storing information about multiple basic processes. The information processing device 1 displays the generation screen 170 based on information about the multiple basic processes obtained from the server 2. When the user selects at least one basic process from the multiple basic processes, the task details are generated. A basic process is also referred to as a basic action. The multiple basic processes may include, for example, moving an object from one area to another area, detecting an object, or holding randomly piled objects.

The generation screen 170 includes a basic processes list 180 indicating a list of multiple basic processes and a task detail screen 171 indicating the task details being generated. The basic processes list 180 includes basic process images 190 indicating the respective multiple basic processes. Each of the basic process images 190 includes, for example, a name 191 of the basic process, a version 193 of the program for performing the basic process, and a figure 195 indicating the basic process. Note that "No image" appears, for example, when no figure 195 is available for the corresponding basic process.

The basic process image 190 includes an instruction area 197 for providing an instruction to display a setting screen for detail setting of the basic process. When the instruction area 197 is selected, the setting screen for detail setting of the basic process appears. The user can use the setting screen to perform detail setting of the basic process in the robotic system 5.

The basic processes list 180 includes a search field 185 for inputting a keyword to search for an intended basic process image 190 from the multiple basic process images 190. The search field 185 is selected to allow an input of a search keyword into the information processing device 1. When the user inputs a search keyword into the input unit 12, the input keyword appears in the search field 185. The controller 10 in the information processing device 1 searches for a basic process image 190 including the input keyword from the multiple basic process images 190. The controller 10 then causes the display 13 to hide the basic process images 190 other than the basic process image 190 including the input keyword.

The generation screen 170 includes an instruction area 173 for providing an instruction to hide the basic processes list 180. When the instruction area 173 is selected, the basic processes list 180 is hidden.

The task detail screen 171 indicates, for example, a flowchart of the task details. The task detail screen 171 displays a start image 171a indicating the start of a task and an end image 171b indicating the end of the task. The user can select a basic process image 190 included in the basic processes list 180 and perform a predetermined input into the input unit 12 to place a copied basic process image 190a, which is a copy of the selected basic process image 190, between the start image 171a and the end image 171b on the task detail screen 171. The user can place the copied basic process image 190a between the start image 171a and the end image 171b by, for example, performing a drag-and-drop operation on the input unit 12. When the copied basic process image 190a is placed between the start image 171a and the end image 171b, the task details including the basic process indicated by the copied basic process image 190a are generated.

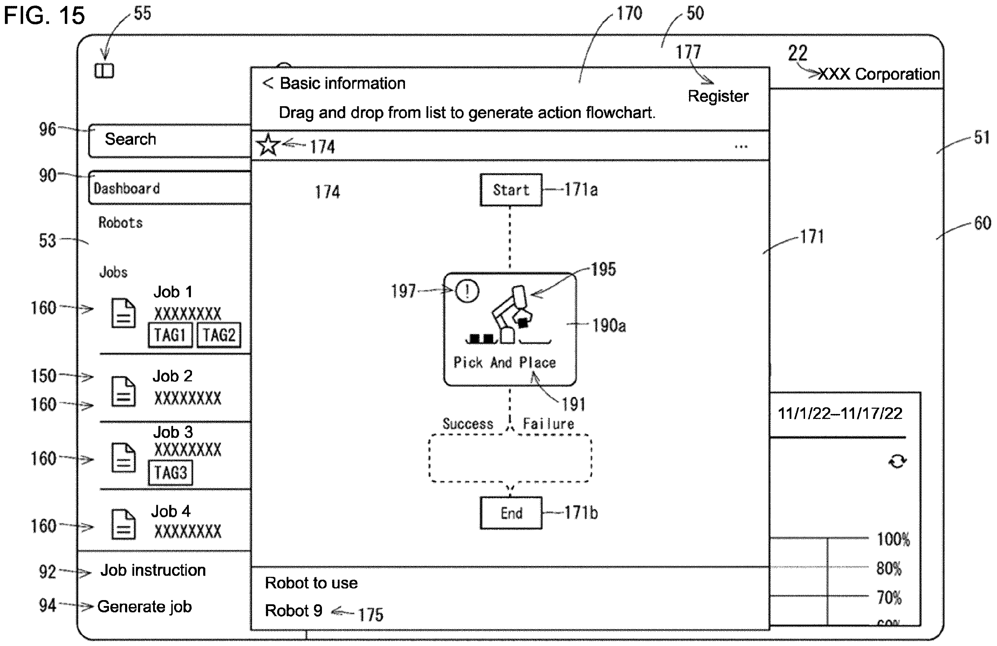

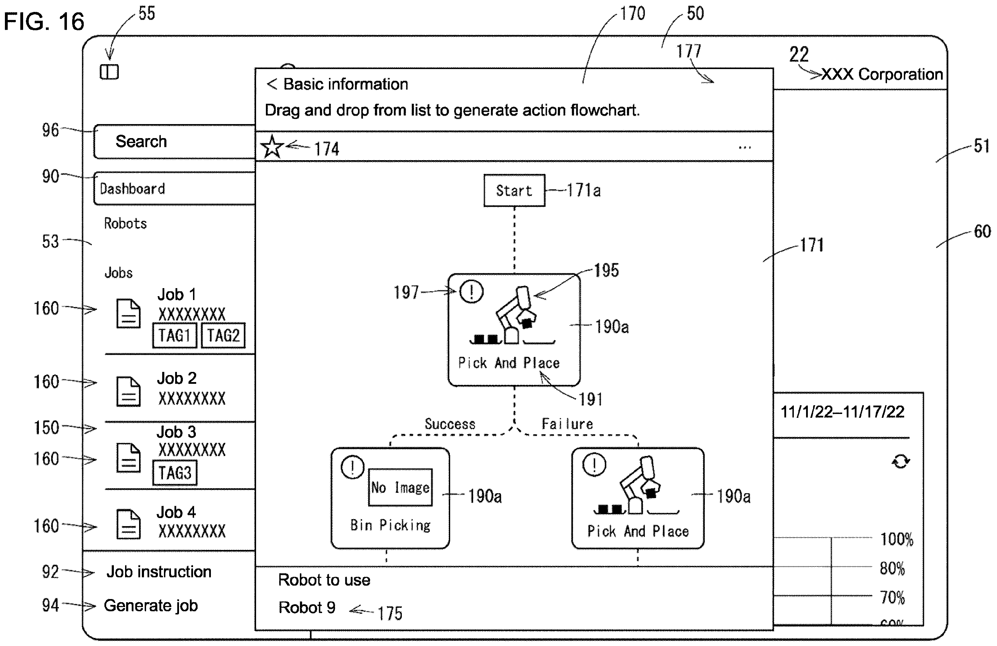

FIG. 15 is a schematic diagram of an example of the copied basic process image 190a placed between the start image 171a and the end image 171b. FIG. 16 is a schematic diagram of an example of multiple copied basic process images 190a placed between the start image 171a and the end image 171b. The shape and the details of each of the copied basic process images 190a are different from the shape and the details of the corresponding basic process image 190 included in the basic processes list 180. For example, the copied basic process image 190a does not include the version 193.

When the copied basic process image 190a is placed between the start image 171a and the end image 171b, the basic processes list 180 is automatically hidden. The generation screen 170 also displays an instruction area 174 (refer to FIGs. 15 and 16) for providing an instruction to display the basic processes list 180. When the instruction area 174 is selected, the basic processes list 180 appears as illustrated in the example in FIG. 14.

As illustrated in FIGs. 15 and 16, when the copied basic process image 190a is placed between the start image 171a and the end image 171b, a name 175 of the robot 3 used to generate the task details appears on the generation screen 170. The generation screen 170 also displays an instruction area 176 for providing an instruction to display a setting screen for setting the robot 3 used to generate the task details. When the instruction area 176 is selected, the setting screen for setting the robot 3 used to generate the task details appears. The user can use the setting screen to cause the robotic system 5 to perform setting of the robot 3 used to generate the task details.

As illustrated in FIGs. 15 and 16, when the copied basic process image 190a is placed between the start image 171a and the end image 171b, an instruction area 177 for providing an instruction to end generation of the task details appears on the generation screen 170. When the instruction area 177 is selected, the controller 10 ends the generation of the task details and generates task information indicating the task details displayed on the task detail screen 171. The controller 10 adds the information that has been input using the input screen 550 to the task information. The controller 10 then causes the interface 14 to transmit the generated task information to the server 2. The server 2 adds the task information received from the information processing device 1 to the target registered tenant-specific information. Instruction Provided to Robot to Perform Task

When the input unit 12 receives a selection input for selecting the instruction area 92, a task selection screen 200 for selecting a target task to be performed by the robot 3 appears on the display 13. The task selection screen 200 may also be referred to as a task designation screen for designating the target task.

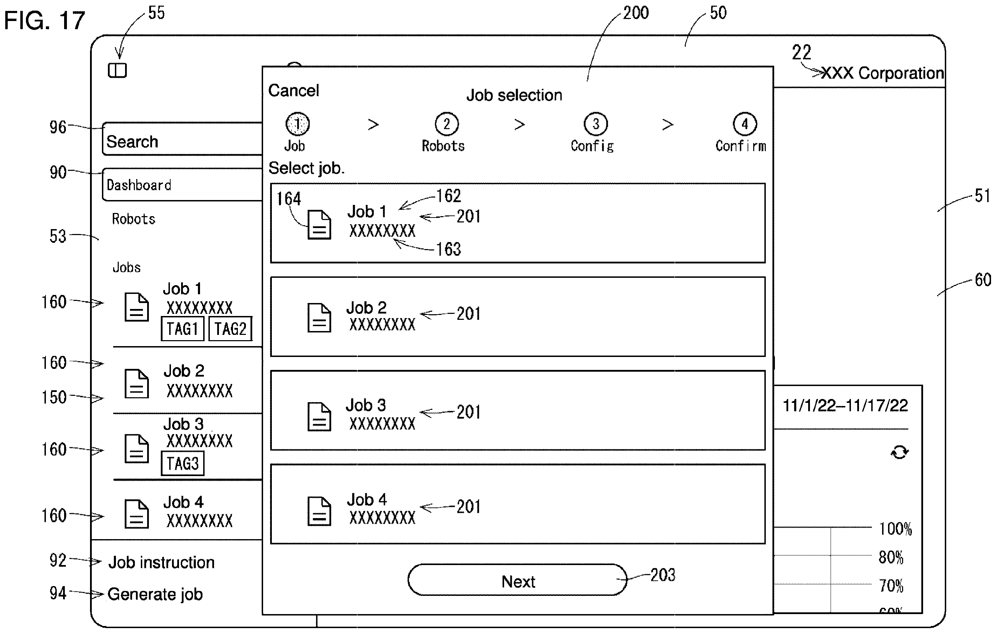

FIG. 17 is a schematic diagram of an example of the task selection screen 200. The task selection screen 200 is, for example, displayed on the main screen 50. The task selection screen 200 includes multiple pieces of task identification information 201 each indicating task information about each of the tasks to be performed by the target robot 3 based on an instruction. In the same manner as or in a similar manner to the task identification information 161 described above, the task identification information 201 includes, for example, the name 162 of the task, the overview 163 of the task, and the image 164 of the task.

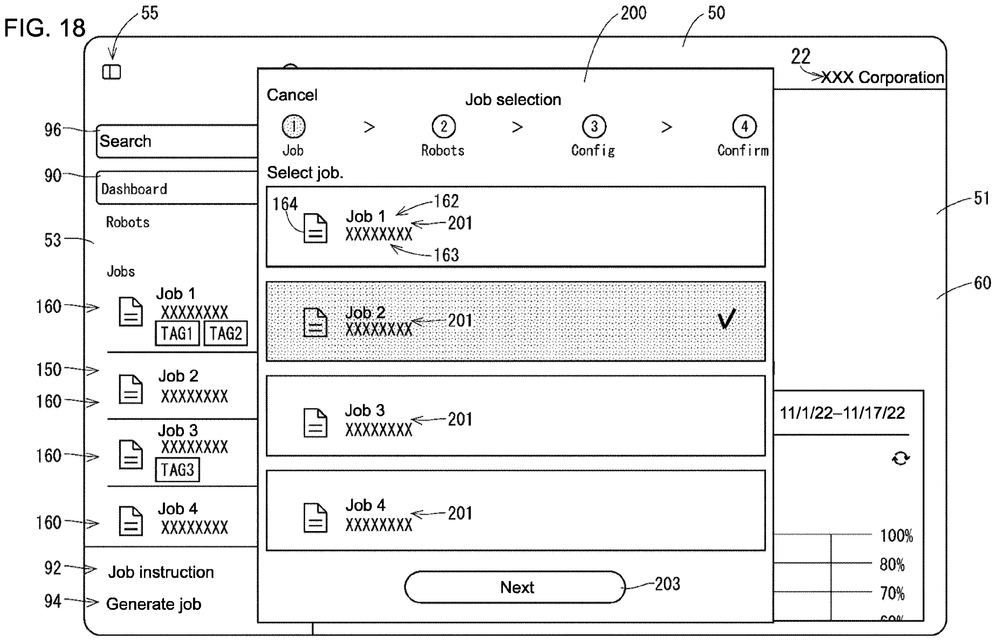

The user can select the target task by selecting one piece of task identification information 201 from the multiple pieces of task identification information 201. In other words, the user can designate the target task by selecting one piece of task identification information 201 from the multiple pieces of task identification information 201. When one piece of task identification information 201 is selected from the multiple pieces of task identification information 201, the task identified with the selected task identification information 201 is determined as the target task. When the input unit 12 receives a selection input for selecting one piece of task identification information 201, the display 13 highlights the selected piece of task identification information 201. FIG. 18 is a schematic diagram illustrating an example highlighted image of the second piece of task identification information 201 from the top selected from the multiple pieces of task identification information 201 illustrated in FIG. 17.

The task selection screen 200 includes an instruction area 203 for providing an instruction to display the next screen. After selecting one piece of task identification information 201, or in other words, after selecting a target task, the user selects the instruction area 203 to display a robot selection screen 210 on the display 13. Note that the task identification information 201 is deselected when the user performs a deselection input into the input unit 12 to deselect the task identification information 201. The deselection input may be, for example, the same operation as the selection input. Note that the task identification information displayed on the task selection screen 200 may be linked to the task list 150 displayed on the left screen 53.

The robot selection screen 210 is used to select at least one target robot 3 to which the task information indicating the details of the target task is to be transmitted and to which an instruction is to be provided to perform the target task. The target robot 3 to which the task information indicating the details of the target task is to be transmitted and to which an instruction is to be provided to perform the target task may hereafter be simply referred to as a destination target robot 3. The robot selection screen 210 is a designation screen for designating at least one destination target robots 3.

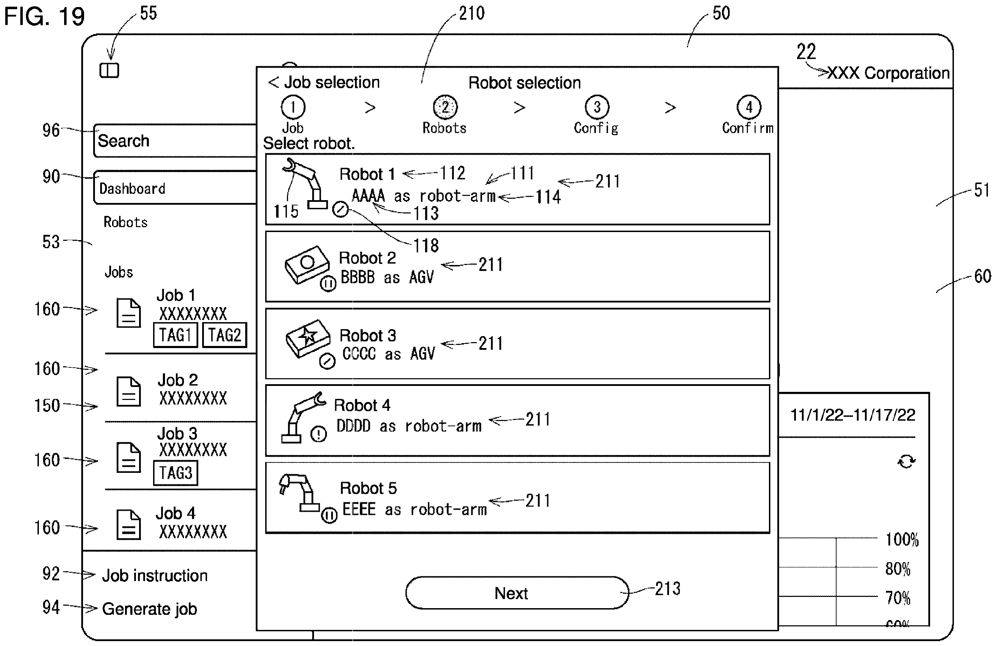

FIG. 19 is a schematic diagram of the robot selection screen 210 illustrating an example display. The robot selection screen 210 is, for example, displayed on the main screen 50. The robot selection screen 210 includes multiple pieces of robot-related information 211 about the respective target robots 3. In the same manner as or in a similar manner to the robot-related information 110 described above, each of the multiple pieces of robot-related information 211 includes the robot identification information 111 for identifying the target robot 3 and the status symbol 118 indicating the status of the target robot 3. The robot identification information 111 includes, for example, the name 112 of the target robot 3, the model 113 of the target robot 3, the information 114 indicating the type of the target robot 3, and the image 115 schematically illustrating the appearance of the target robot 3. Note that the robot-related information 211 may not include the status symbol 118. The robot identification information displayed on the robot selection screen 210 may be linked to the robot list 100 displayed on the left screen 53.

The user can select at least one destination target robot 3 by selecting at least one piece of robot-related information 211 from the multiple pieces of robot-related information 211. In other words, the user can designate at least one destination target robot 3 by selecting at least one piece of robot-related information 211 from the multiple pieces of robot-related information 211. When the robot-related information 211 is selected, the robot identification information 111 included in the robot-related information 211 is selected. When at least one piece of robot-related information 211 is selected from the multiple pieces of robot-related information 211, at least one target robot 3 identified with the robot identification information 111 included in the selected at least one piece of robot-related information 211 is determined as the destination target robot 3.

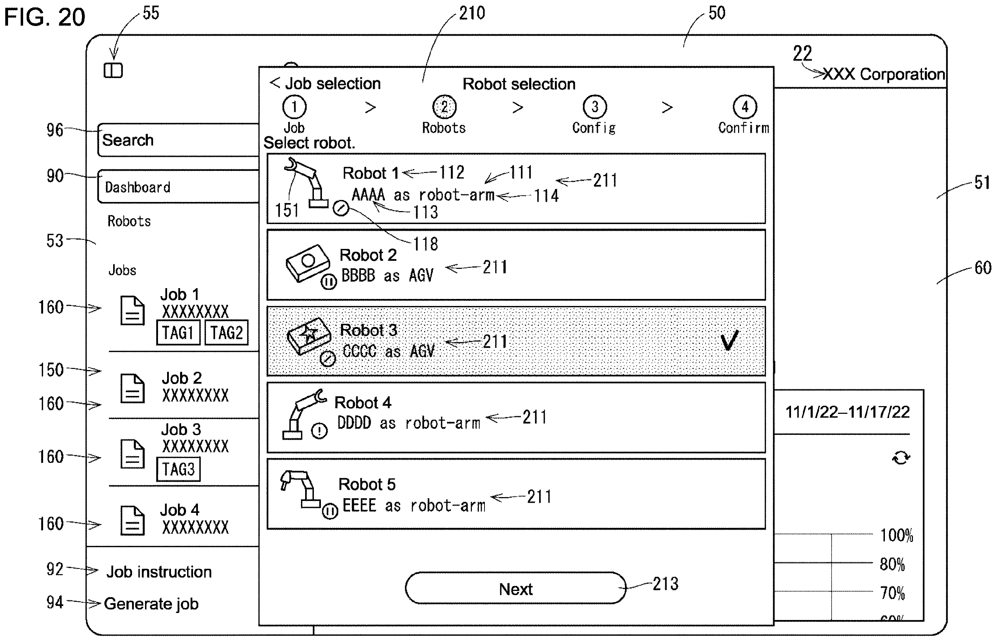

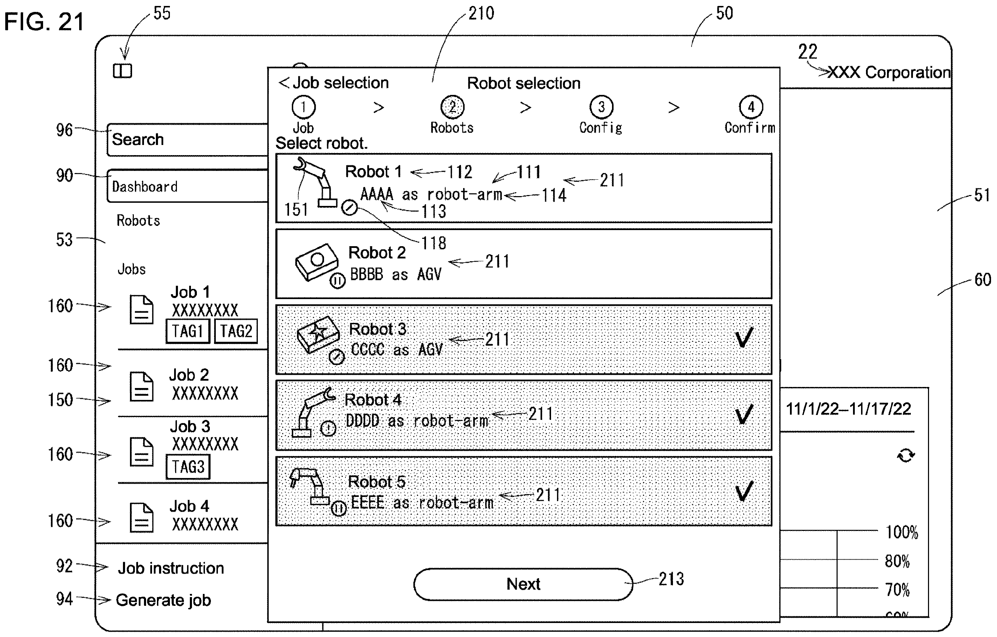

When the input unit 12 receives a selection input for selecting the robot-related information 211, the display 13 highlights the selected robot-related information 211. FIG. 20 is a schematic diagram illustrating an example highlighted image of the third piece of robot-related information 211 from the top selected from the multiple pieces of robot-related information 211 illustrated in FIG. 19. FIG. 21 is a schematic diagram illustrating an example highlighted image of the third, fourth, and fifth pieces of robot-related information 211 from the top selected from the multiple pieces of robot-related information 211 illustrated in FIG. 19. Note that the robot-related information 211 is deselected when the user performs a deselection input into the input unit 12 to deselect the robot-related information 211.

The robot selection screen 210 includes an instruction area 213 for providing an instruction to display the next screen. When the user selects at least one piece of robot-related information 211, or in other words, selects at least one destination target robot 3 and then selects the instruction area 213, a designation screen 220 for designating a start condition and an end condition for the target task appears on the display 13.

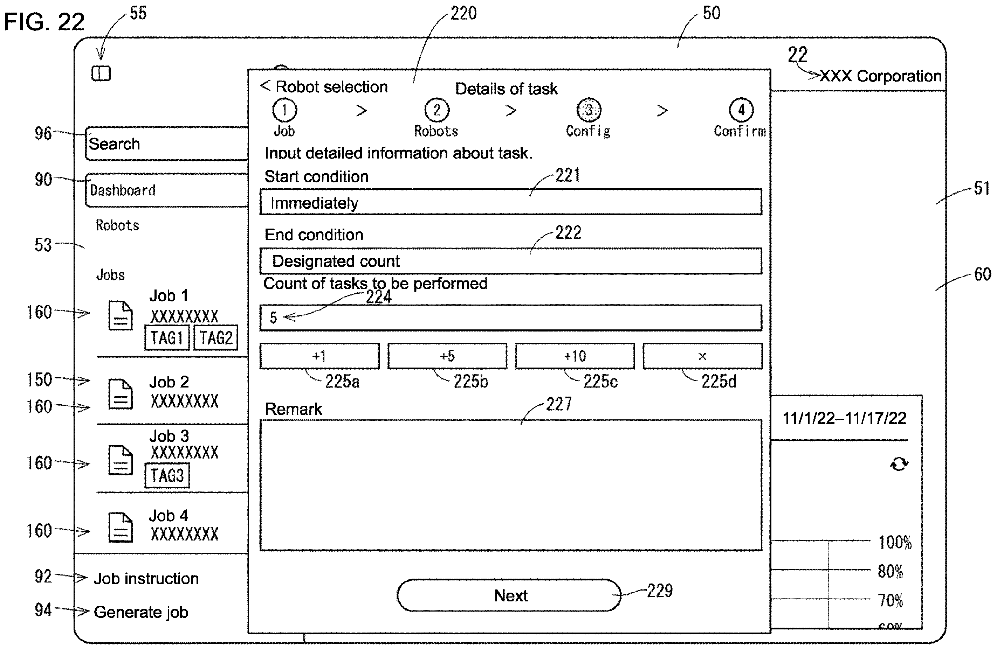

FIG. 22 is a schematic diagram of the designation screen 220 illustrating an example display. The designation screen 220 is, for example, displayed on the main screen 50. The designation screen 220 includes, for example, a designation area 221 for designating a start condition for the target task. The user can designate the start condition for the target task using the designation area 221. The user can designate, for example, "perform immediately" as the start condition for the target task. Perform immediately refers to the target robot 3 starting the target task as early as possible. The user can also designate the start time as the start condition for the target task.

The designation screen 220 includes, for example, a designation area 223 for designating the end condition for the target task. The user can designate the end condition for the target task using the designation area 223. The user can designate, for example, the count of target tasks to be performed as the end condition for the target task. The user can also designate the end time as the end condition for the target task. The user can also designate, for example, no target object remaining as the end condition for the target task.

When the count of target tasks to be performed is designated as the end condition for the target task, the designation screen 220 displays multiple setting areas 225a, 225b, 225c, and 225d for setting the count of target tasks to be performed. When the input unit 12 receives a selection input for selecting the setting area 225a, the set value for the count of target tasks to be performed is incremented by 1. When the input unit 12 receives a selection input for selecting the setting area 225b, the set value for the count of target tasks to be performed is incremented by 5. When the input unit 12 receives a selection input for selecting the setting area 225c, the set value for the count of target tasks to be performed is incremented by 10. When the input unit 12 receives a selection input for selecting the setting area 225c, the set value for the count of target tasks to be performed is reset to zero. The designation screen 220 also displays a set value 224 for the count of target tasks to be performed.

The designation screen 220 includes an input area 227 for inputting a remark about the target task. The user selects the input area 227 to input a remark into the information processing device 1. When the user inputs a remark into the input unit 12, the input remark appears in the input area 227.

The designation screen 220 includes, for example, an instruction area 229 for providing an instruction to display the next screen. When the user selects the instruction area 229 after designating the start condition and the end condition, a confirmation screen 230 for confirming the information designated using the task selection screen 200, the robot selection screen 210, and the designation screen 220 appears on the display 13.

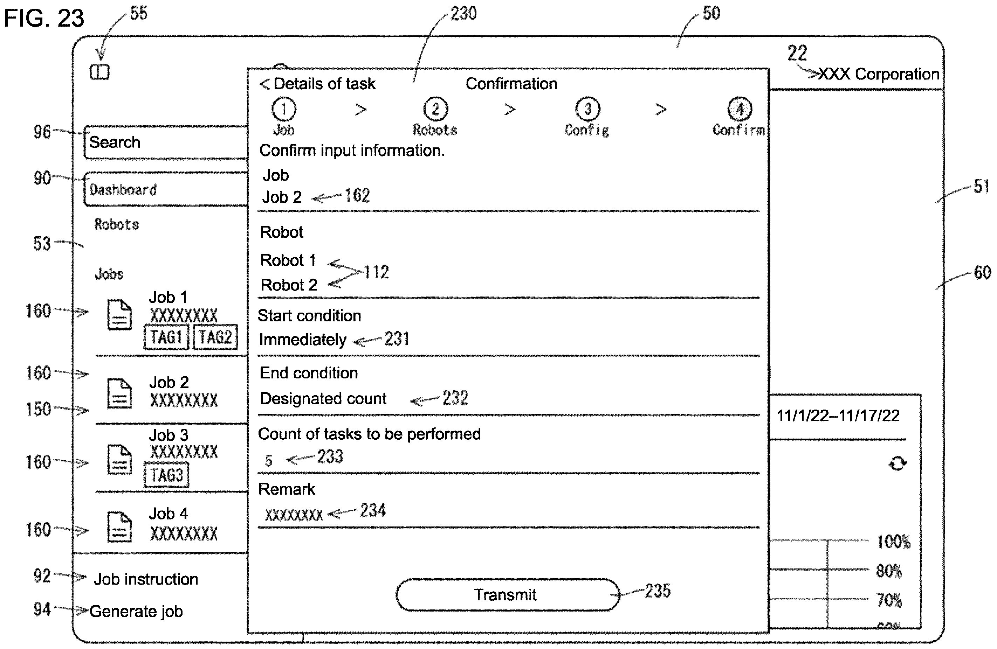

FIG. 23 is a schematic diagram of the confirmation screen 230 illustrating an example display. The confirmation screen 230 displays, for example, the name 162 of the selected target task and the name 112 of the selected at least one destination target robot 3. The confirmation screen 230 also displays a start condition 231 and an end condition 232 designated for the target task. The confirmation screen 230 also displays a set value 233 for the count of target tasks to be performed when the count of target tasks to be performed is designated as the end condition for the target task. The confirmation screen 230 also displays a remark 234 input using the input area 227 on the designation screen 220.

The confirmation screen 230 includes an instruction area 235 for providing an instruction to transmit the task information indicating the details of the selected target task to the selected at least one destination target robot 3. When the user selects the instruction area 235 after confirming the information displayed on the confirmation screen 230, the controller 10 generates transmission instruction information for providing an instruction to transmit the task information indicating the details of the selected target task to the selected at least one destination target robot 3. The controller 10 then causes the interface 14 to transmit the generated transmission instruction information to the server 2. The transmission instruction information includes, for example, information for specifying the selected target task and information for specifying the selected at least one destination target robot 3. The transmission instruction information includes the start condition and the end condition for the target task. When the information processing device 1 transmits the transmission instruction information to the server 2, a notification screen 240 for providing a notification indicating transmission completion of the transmission instruction information appears on the display 13. Note that the display 13 may display a scheduled end time of the task.

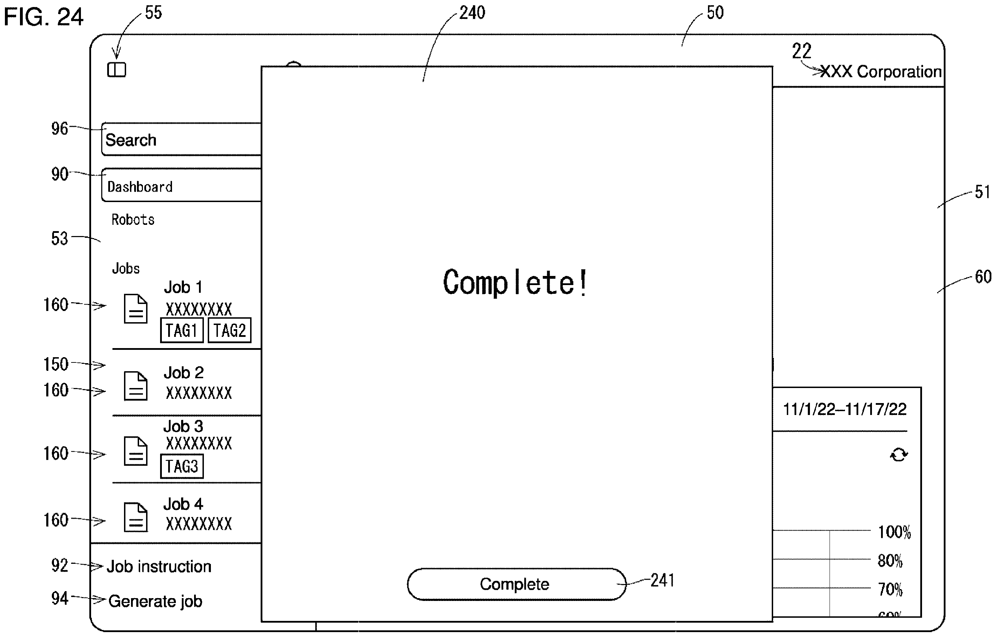

FIG. 24 is a schematic diagram of the notification screen 240 illustrating an example display. The notification screen 240 is, for example, displayed on the main screen 50. The notification screen 240 includes an instruction area 241 for providing an instruction to delete the notification screen 240. When the instruction area 241 is selected, the display 13 hides the notification screen 240 and displays the main screen 50.

In response to receiving the transmission instruction information from the information processing device 1, the server 2 generates task instruction information for providing an instruction to perform the task and transmits the information to the destination target robot 3. The task instruction information includes task information stored in the target individual database and indicating the details of the target task. The task instruction information includes the start condition and the end condition for the target task included in the transmission instruction information received by the server 2 from the information processing device 1. The task information, the start condition, and the end condition are collectively referred to as task processing information. The task instruction information thus includes the task processing information about the target task. The server 2 transmits the task instruction information to the robot controller 3a in the at least one destination target robot 3 selected by the user.

In response to receiving the task instruction information, the robot controller 3a controls the robotic unit 3b based on the received task instruction information. The destination target robot 3 then performs the target task associated with the task information included in the task instruction information received from the server 2. The destination target robot 3 starts the target task based on the start condition included in the task instruction information, and ends the target task based on the end condition included in the task instruction information. Processing of a task that starts based on the start condition and ends based on the end condition is referred to as task processing. The task instruction information thus may be information for providing an instruction to perform the task processing. When the server 2 transmits the task instruction information to the robot 3, the server 2 provides an instruction to the robot 3 to perform the task processing.

When the start condition is "perform immediately," the destination target robot 3 performs the target task as early as possible. For example, when the destination target robot 3 receives the task information while performing another task, the destination target robot 3 starts the target task immediately after completing the other task. When the start time is designated as the start condition, the destination target robot 3 starts the target task at the start time. When the count of tasks to be performed is designated as the end condition, the destination target robot 3 performs the target task for the count corresponding to the set value. When the end time is designated as the end condition, the destination target robot 3 repeatedly performs the target task until the end time. When no target object remaining is designated as the end condition, the destination target robot 3 repeatedly performs the target task until no target object remains.

As described above, in this example, when an instruction (in other words, a task processing instruction) is provided to the robot 3 to perform a task, the task information indicating the details of the target task, the start condition for the target task, and the end condition for the target task are provided to the robot 3 from the server 2. The robot 3 performs the task processing for performing the target task at least once based on the information notified to the robot 3.

As described above, in this example, the display 13 displays the robot selection screen 210 for selecting at least one destination target robot 3 through the input unit 12, allowing the user to select the destination target robot 3 easily. This improves the user convenience of the information processing device 1. The robot selection screen 210 can be used to select multiple destination target robots 3. Instructions can thus be provided to multiple robots 3 to perform the same task.

In this example, the robot selection screen 210 or the robot list 100 (refer to, for example, FIG. 5) displays, for example, the information 114 indicating the type of the robot 3. The user can thus select the destination target robot 3 after confirming the information 114 indicating the type of the robot 3. This allows the user to select the destination target robot 3 easily.

In this example, the status symbols 118 each indicate the status of the corresponding robot 3 on the robot selection screen 210 or the robot list 100 (refer to, for example, FIG. 5). The user can thus select the destination target robot 3 after confirming the status of each of the robots 3. This allows the user to select the destination target robot 3 easily.

In this example, the display 13 displays the task selection screen 200 for selecting the target task through the input unit 12, allowing the user to select the target task easily. This improves the user convenience of the information processing device 1.

In this example, the controller 10 causes the display 13 to display multiple pieces of robot identification information and the communication connection status in a viewable manner to allow selection of, through the input unit 12, at least one robot 3 to perform at least one target task selected by the user from multiple tasks indicated by multiple pieces of task information generated using one of the multiple robots 3. This allows the user to select at least one robot 3 to perform the target task after confirming multiple pieces of robot identification information and the communication connection status. This allows the user to select at least one robot 3 to perform the target task easily. This improves the user convenience of the information processing device 1.

### Display of Detailed Information about Robot

When the user selects the robot-related information 110 displayed on the main screen 50, a robot detail screen 300 indicating detailed information about the target robot 3 corresponding to the selected robot-related information 110 appears on the main screen 50. The robot-related information 110 is also an instruction area for providing an instruction to display the robot detail screen 300. When the robot-related information 110 is selected, the robot detail screen 300 on the right screen 51 of the main screen 50 appears on the display 13, in place of the dashboard 60. The selected robot-related information 110 is, for example, highlighted. The target robot 3 corresponding to the selected robot-related information 110 may hereafter be referred to as a selected robot 3.

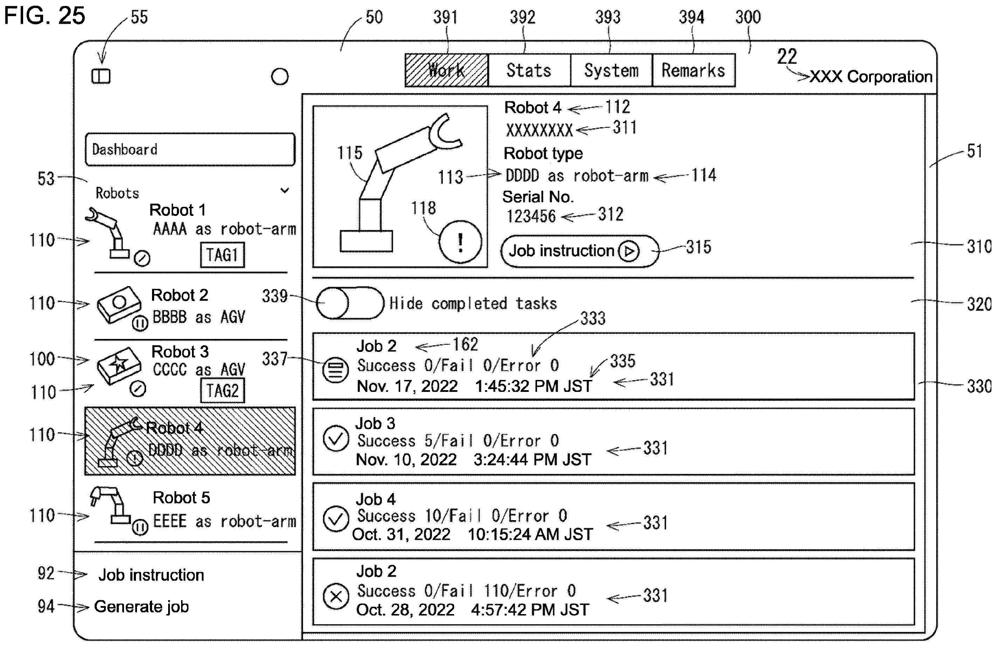

FIG. 25 is a schematic diagram of the main screen 50 including the robot detail screen 300, illustrating an example display. In the example in FIG. 24, the robot-related information 110 about the target robot 3 with the name 112 being "Robot 4" is selected.

The robot detail screen 300 includes, for example, a basic screen 310 indicating basic information about the selected robot 3 and a detail screen 320 indicating detailed information about the selected robot 3. The robot detail screen 300 also includes multiple instruction areas 391, 392, 393, and 394 for switching the display on the detail screen 320.

The basic screen 310 includes, for example, the same information as or similar information to the selected robot-related information 110. The basic screen 310 includes, for example, the name 112 of the selected robot 3, the model 113 of the selected robot 3, the information 114 indicating the type of the selected robot 3, the image 115 schematically illustrating the appearance of the selected robot 3, and the status symbol 118 indicating the status of the selected robot 3. The basic screen 310 also includes, for example, an overview 311 of the selected robot 3 and a serial number 312 of the selected robot 3.

The basic screen 310 includes an instruction area 315, which is the same as or similar to the instruction area 92. The instruction area 315 is an area for providing an instruction to start processing for providing an instruction to the robot 3 to perform a task. When the instruction area 315 is selected, the task selection screen 200 described above appears on the display 13. In this case, when the task selection screen 200 is switched to the robot selection screen 210, the robot-related information 211 about the selected robot 3 is selected on the robot selection screen 210.

The instruction area 391 is an area for providing an instruction to display, as the detail screen 320, a list 330 listing tasks performed by the selected robot 3 based on an instruction provided in the past. The instruction area 392 is an area for providing an instruction to display a dashboard 360 indicating the results of tasks previously performed by the selected robot 3. The instruction area 393 is an area for providing an instruction to display a capability information screen 370 indicating the capabilities of the selected robot 3. The instruction area 394 is an area for providing an instruction to display a remark screen 380 indicating a remark about the selected robot 3.

When the instruction area 391 is selected, the list 330 appears as the detail screen 320 as illustrated in FIG. 25. The list 330 includes task-processing-related information 331 associated with task processing performed by the selected robot 3 based on an instruction provided in the past. The task-processing-related information 331 includes, for example, the name 162 of the task performed in the task processing, result information 333 indicating the results of the task processing, and instruction date and time 335 at which an instruction is provided to the selected robot 3 to perform the task processing. The instruction date and time 335 may be, for example, the date and time at which the instruction area 235 (refer to FIG. 23) included in the confirmation screen 230 described above is selected. The result information 333 includes the number of task errors, the number of task failures, and the number of task successes in one cycle of task processing. In FIG. 25, the number of task errors is indicated with a number next to "Error," the number of task failures is indicated with a number next to "Fail," and the number of task successes is indicated with a number next to "Success." The result information 333 is information indicating the results of tasks performed by the selected robot 3 based on an instruction provided in the past. The result information 333 may include at least one of the count of tasks performed in the task processing or the performance duration of the task processing.

The task-processing-related information 331 includes status symbols 337 each indicating the status of the task processing. The status symbols 337 are information indicating the status of the task processing. In this example, the status symbols 337 include ten types of status symbols 337a to 337j. Each of the multiple pieces of task-processing-related information 331 includes one of the ten types of status symbols 337a to 337j.

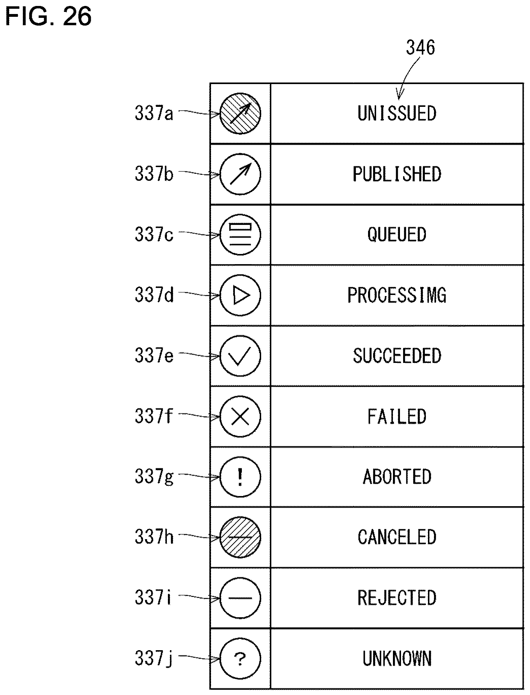

FIG. 26 is a schematic diagram of the ten types of example status symbols 337a to 337j. The status symbol 337a indicates that the server 2 has been instructed to transmit task information indicating the details of the task to be performed in the task processing but the instruction to perform the task processing has not been provided to the selected robot 3. The status symbol 337b indicates that the instruction to perform the task processing has been provided to the selected robot 3 but the selected robot 3 has not detected the provided instruction to perform the task processing. The status symbol 337c indicates that the selected robot 3 has detected the instruction to perform the task processing provided from the server 2 but the task processing has not started.

The status symbol 337d indicates that the task processing is in progress. The status symbol 337e indicates that the task processing has been successful. The status symbol 337f indicates that the task processing has failed. The status symbol 337g indicates that the selected robot 3 has stopped operating due to an error and cannot start the task, causing the task processing to be aborted. In this example, the task processing is determined to have failed when the robot 3 fails to perform one task but succeedingly completes the next task. Thus, when a task is performed multiple times in the task processing, the task processing is determined to have failed when the task fails at least once. The task processing is determined to have been successful when no task fails in the task processing. Thus, when the task is performed N times (N is an integer greater than or equal to 2) in the task processing, the task processing is determined to be successful when the task is successful in all N tasks.

The status symbol 337h indicates that the instruction to perform the task processing has been canceled by the server 2. The status symbol 337i indicates that the selected robot 3 has rejected the instruction to perform the task processing. When the selected robot 3 cannot perform the task in the provided instruction due to its capabilities, the selected robot 3 rejects the instruction. When a task in the instruction provided to the selected robot 3 being an AGV is a task specific to a robotic arm, the robot 3 cannot perform the task, and thus rejects the instruction to perform the task. In another example, when a task in the instruction provided to the selected robot 3 being a single-arm robot is a task specific to a dual-arm robot, the robot 3 cannot perform the task, and thus rejects the instruction to perform the task. The status symbol 337j indicates that the status of the task processing is unknown.

The list 330 includes an instruction area 339 for providing an instruction to switch between displaying and hiding the task-processing-related information 331 about the task processing being complete. When the instruction area 339 is selected with the task-processing-related information 331 about the task processing being complete displayed on the list 330, the task-processing-related information 331 about the task processing being complete is deleted from the list 330. When the instruction area 339 is selected without the task-processing-related information 330 about the task processing being complete displayed on the list 331, the task-processing-related information 331 about the task processing being complete appears on the list 330.

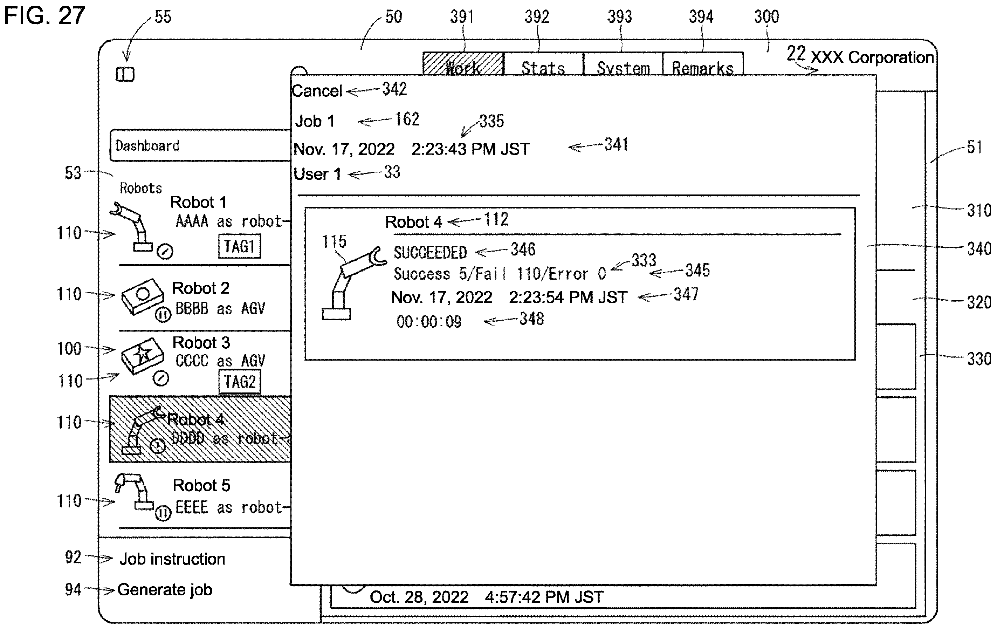

When the user selects the task-processing-related information 331, a detail screen 340 indicating detailed information about the task processing corresponding to the selected task-processing-related information 331 appears on the display 13. FIG. 27 is a schematic diagram of an example detail screen 340.

As illustrated in FIG. 27, the detail screen 340 is, for example, displayed on the main screen 50. The detail screen 340 includes basic information 341 about the task processing, detailed information 345 about the task processing, and an instruction area 342.

The basic information 341 includes the name 162 of the task performed in the task processing, and the instruction date and time 335 at which an instruction is provided to the selected robot 3 to perform the task processing. The basic information 341 includes the user identification information 33 of the user when the instruction is provided to the selected robot 3 to perform the task processing.

The detailed information 345 includes the name 112 of the selected robot 3 receiving the instruction to perform the task processing and the image 115 schematically illustrating the appearance of the selected robot 3. The detailed information 345 includes the result information 333 indicating the results of the task processing and a status string 346 indicating the status of the task processing. In FIG. 26, status strings 346 indicating the same information as the respective status symbols 337a to 337j are indicated on the right of the status symbols 337a to 337j. In the example in FIG. 27, the status string 346 being "SUCCEEDED" indicates that the task processing has been successful in the same manner as or in a similar manner to the status symbol 337e. The detailed information 345 includes a date and time 347 at which the task processing is started and time duration 348 from the start to the end of the task processing. The time duration 348 is also referred to as the duration during which the task processing is performed. The detailed information 345 may include an instruction area for instructing the selected robot 3 to suspend the task being performed by the selected robot 3. When the instruction area is selected, the information processing device 1 instructs the selected robot 3 to suspend the task through the server 2. Note that the instruction area for instructing the selected robot 3 to suspend the task being performed by the selected robot 3 may be displayed for the tasks instructed by the signed-in user alone. In other words, tasks in the instruction provided by another user may be controlled to be nonsuspendable.

The instruction area 342 is an area for providing an instruction to switch between displaying and hiding the detail screen 340. When the user selects the instruction area 342, the display 13 hides the detail screen 340.

Note that the detail screen 340 may include an instruction area, which is the same as or similar to the instruction areas 92 and 315. When a selection input for selecting the instruction area is received, the target robot 3 displayed on the detail screen 340 may receive the instruction to perform the task processing corresponding to the selected task-processing-related information 331. The target robot 3 may be instructed to perform the task processing with the same task conditions as in the previous task processing, including the count of tasks.

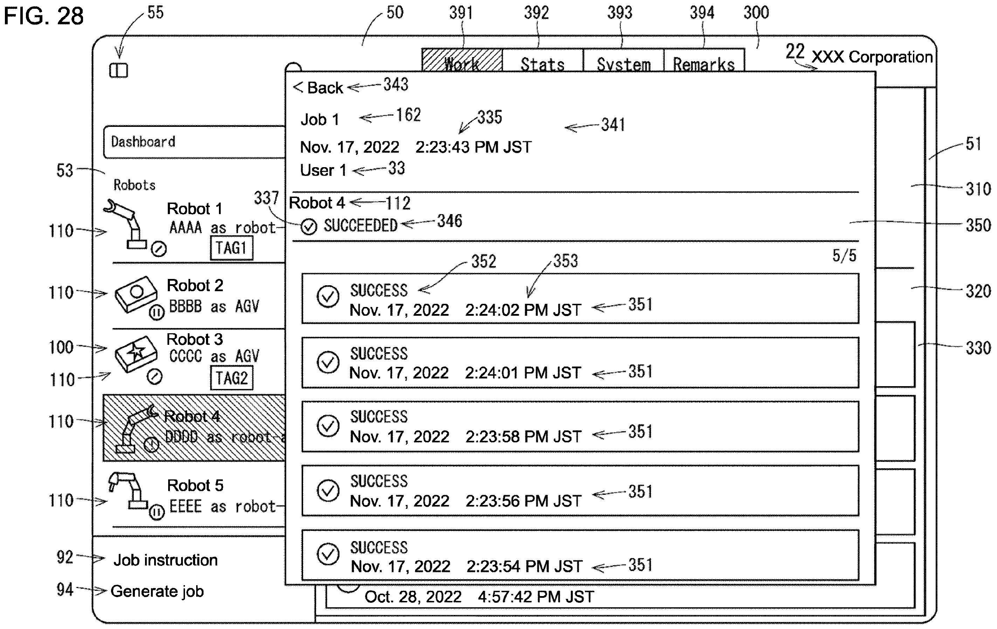

When the user selects the detailed information 345, a detail screen 350 indicating more detailed information about the task processing appears on the display 13. FIG. 28 is a schematic diagram of the detail screen 350 illustrating an example display.

As illustrated in FIG. 28, the detail screen 350 is, for example, displayed on the main screen 50. The detail screen 350 includes, for example, the basic information 341 about the task processing, the name 112 of the selected robot 3 receiving the instruction to perform the task processing, the status symbol 337 indicating the status of the task processing, and the status string 346 indicating the status of the task processing. The detail screen 350 also includes multiple pieces of task-related information 351 about the task to be performed in the task processing. Each of the multiple pieces of task-related information 351 includes result information 352 indicating the results of the task and a date and time 353 at which the task is started. The result information 352 indicates, for example, "ERROR" when the task has an error, "FAIL" when the task has a failure, and "SUCCESS" when the task is successful.

When at least one of the result information 352 or the date and time 353 included in the task-related information 351 is selected, detailed information about the task may appear. The detailed information about the task may include result information indicating the results of object detection performed in the task. The result information may include a mask image or a bounding box indicating the detected object, or may include a score indicating the certainty factor for object detection. The detailed information about the task may include an actual image captured in object detection performed in the task. In this case, the actual image may indicate a mask image or a bounding box indicating the detected object, or may include a score indicating the certainty factor for object detection.

When the user selects the task-related information 351, log information about the task corresponding to the selected task-related information 351 appears on the display 13. The log information may include, for example, information indicating the movement of the selected robot 3 that performs the task.

The detail screen 350 includes an instruction area 343 for providing an instruction to display the detail screen 340, which is the previous screen. When the instruction area 343 is selected, the display 13 hides the detail screen 350 and displays the detail screen 340 as illustrated in FIG. 27.

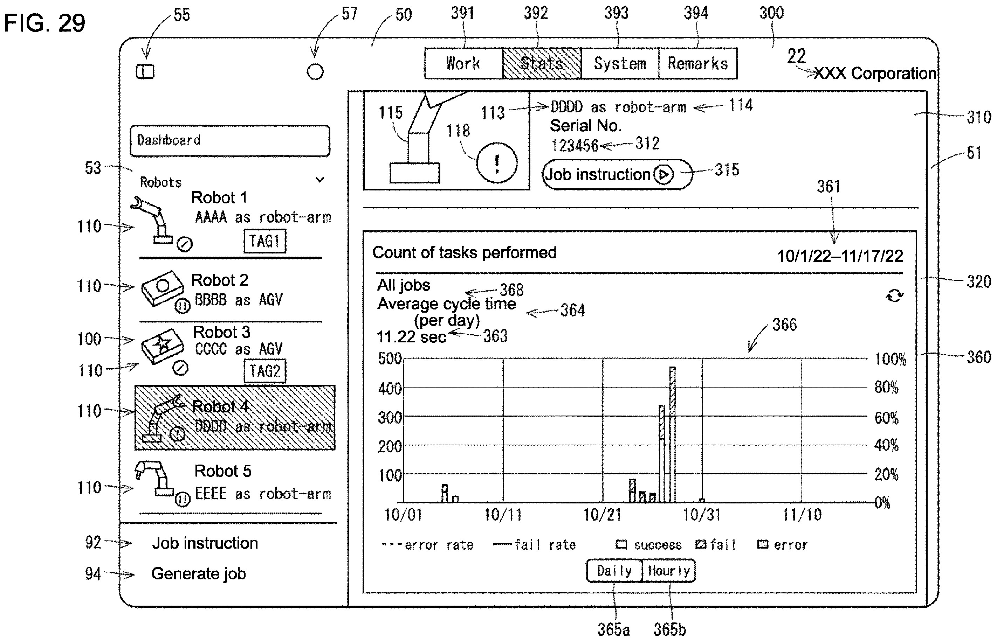

When the instruction area 392 is selected, the dashboard 360 appears as the detail screen 320. FIG. 29 is a schematic diagram of the main screen 50 including the dashboard 360 as the detail screen 320, illustrating an example display. The dashboard 360 has the same structure as or a similar structure to the task result screen 80 illustrated in FIG. 9 described above. The dashboard 360 indicates the results of the tasks performed by the selected robot 3 in a predetermined period. The dashboard 360 includes an input area 361, which is the same as or similar to the input area 81 described above, for inputting the predetermined period.

The dashboard 360 includes an instruction area 368 for providing an instruction to display a selection screen for selecting whether to display the results of all the tasks (in other words, all types of tasks) performed by the selected robot 3 in the predetermined period on the dashboard 360 or to display the results of a specific task (in other words, a specific type of task) performed by the selected robot 3 in the predetermined period on the dashboard 360. When the user selects the instruction area 368, a selection screen, which is the same as or similar to the selection screen 120 described above, appears on the display 13. The user can use the selection screen to select the task for which the results are to be displayed on the dashboard 360. More specifically, the user can select, using the selection screen, whether to display the results of all the tasks performed by the selected robot 3 in the predetermined period on the dashboard 360 or to display the results of a specific task performed by the selected robot 3 in the predetermined period on the dashboard 360.

The dashboard 360 includes an average cycle time 363 of tasks performed by the selected robot 3. The dashboard 360 may display the average cycle time 363 per day or the average cycle time 363 per hour. The dashboard 360 includes an instruction area 365a for providing an instruction to display the average cycle time 363 per day, and an instruction area 365b for providing an instruction to display the average cycle time 363 per hour. The instruction areas 365a and 365b are the same as or similar to the instruction areas 85a and 85b described above. When the dashboard 360 displays the results of all the tasks performed in the predetermined period, the dashboard 360 displays the average cycle time 363 of all the tasks performed in the predetermined period. When the dashboard 360 displays the results of a specific task performed in the predetermined period, the dashboard 360 displays the average cycle time 363 of the specific task performed in the predetermined period.

The dashboard 360 also includes information 364 indicating whether the average cycle time 363 indicated on the dashboard 360 is the average cycle time 363 per day or the average cycle time 363 per hour.

The dashboard 360 also indicates a biaxial graph 366 showing the results of the tasks performed by the selected robot 3 in the predetermined period. The biaxial graph 366 is, as the biaxial graph 86 described above, a stacked bar graph showing the number of task errors (indicated as "error" in the figure), the number of task failures (indicated as "fail" in the figure), and the number of task successes (indicated as "success" in the figure). The biaxial graph 366 includes, as the biaxial graph 86 described above, a broken line graph showing the proportion of task errors (indicated as "error rate" in the figure), and a solid line graph showing the proportion of task failures (indicated as "fail rate" in the figure).

When the dashboard 360 displays the results of all the tasks performed in the predetermined period, the biaxial graph 366 collectively shows the number of task errors, the number of task failures, the number of task successes, the proportion of task errors, and the proportion of task failures in all the tasks performed in the predetermined period. When the dashboard 360 displays the results of a specific task performed in the predetermined period, the biaxial graph 366 shows the number of task errors, the number of task failures, the number of task successes, the proportion of task errors, and the proportion of task failures in the specific task performed in the predetermined period.

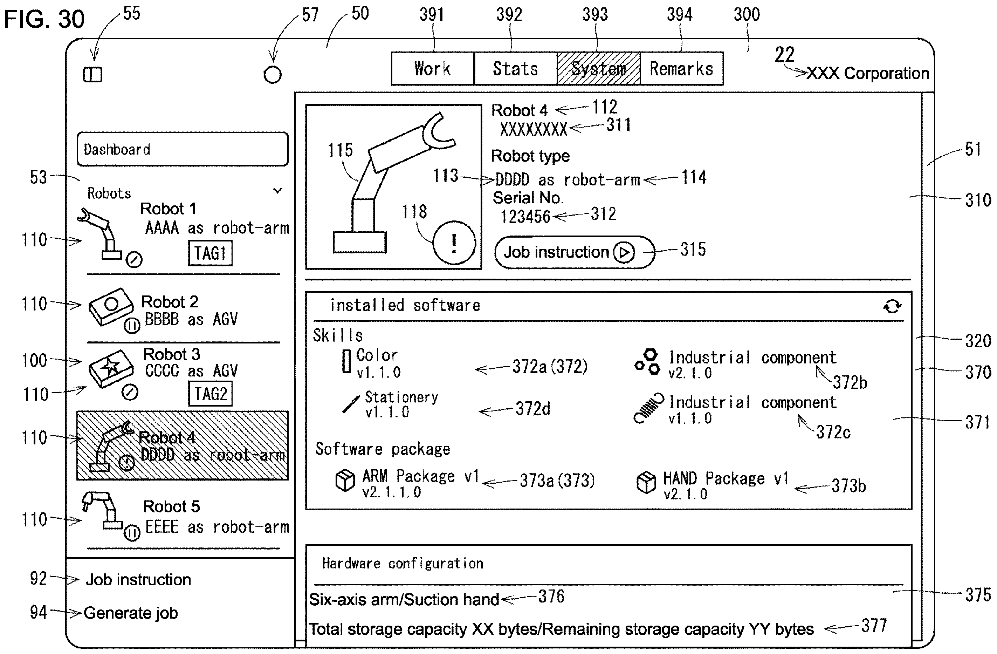

When the instruction area 393 is selected, the capability information screen 370 appears as the detail screen 320. FIG. 30 is a schematic diagram of the main screen 50 including the capability information screen 370 as the detail screen 320, illustrating an example display.

As illustrated in FIG. 30, the capability information screen 370 includes, for example, a software information screen 371 indicating software installed in the selected robot 3, and a hardware information screen 375 indicating information about hardware included in the selected robot 3.

The software information screen 371 includes, for example, AI-based software identification information 372 for identifying AI-based software installed in the robot controller 3a in the selected robot 3 and algorithm-based software identification information 373 for identifying algorithm-based software installed in the robot controller 3a in the selected robot 3. AI is an abbreviation for artificial intelligence.

In the example in FIG. 30, the software information screen 371 displays AI-based software identification information 372a for identifying AI-based software for detecting the color of an object, AI-based software identification information 372b for identifying AI-based software for detecting a nut in an industrial component, AI-based software identification information 372c for identifying AI-based software for detecting a spring in an industrial component, and AI-based software identification information 372d for identifying AI-based software for detecting a piece of stationery. In the example in FIG. 30, the software information screen 371 displays algorithm-based software identification information 373a for identifying an algorithm-based software package including multiple pieces of algorithm-based software for controlling the arm of the selected robot 3, and algorithm-based software identification information 373b for identifying an algorithm-based software package including multiple pieces of algorithm-based software for controlling the hand of the selected robot 3. Information displayed on the software information screen 371 is not limited to this example.

The hardware information screen 375 includes, for example, robotic unit configuration information 376 indicating the hardware configuration of the robotic unit 3b. In the example in FIG. 30, the hardware information screen 375 displays the robotic unit configuration information 376 indicating that the robotic unit 3b includes a six-axis arm and the robotic unit 3b includes a suction hand. The hardware information screen 375 may also include controller hardware information 377 about the hardware of the robot controller 3a. In the example in FIG. 30, the hardware information screen 375 displays the controller hardware information 377 indicating the total storage capacity and the remaining storage capacity of the storage included in the robot controller 3a. Information displayed on the hardware information screen 375 is not limited to this example.

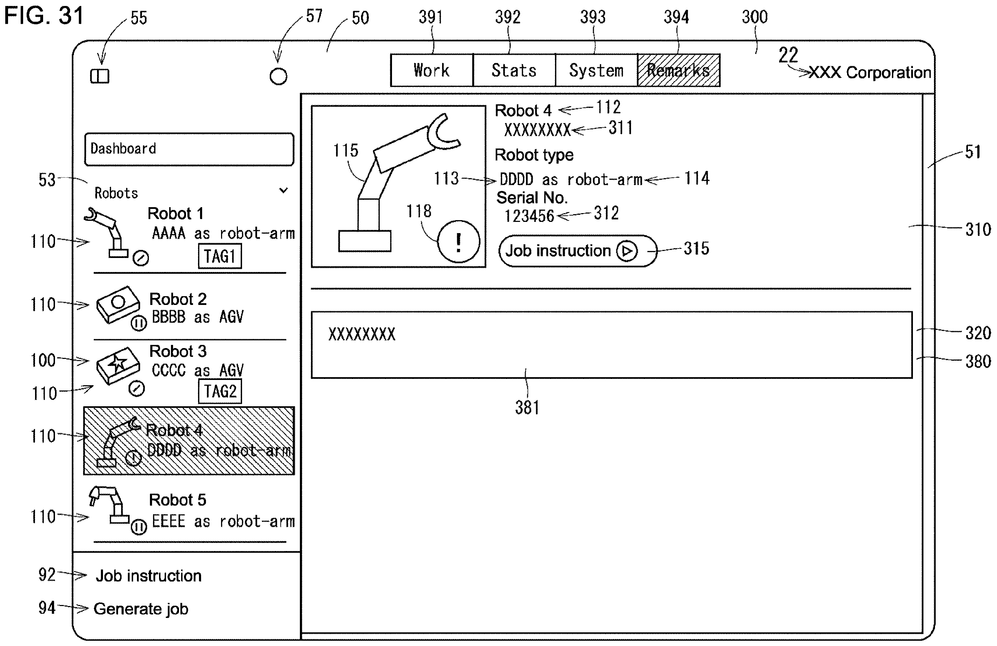

When the instruction area 394 is selected, the remark screen 380 appears as the detail screen 320. FIG. 31 is a schematic diagram of the main screen 50 including the remark screen 380 as the detail screen 320, illustrating an example display. As illustrated in FIG. 30, the remark screen 380 includes an input area 381 for inputting a remark about the selected robot 3. The user selects the input area 381 to input a remark into the information processing device 1. When the user inputs a remark into the input unit 12, the input remark appears on the input area 381.

As described above, in this example, the status of each of the tasks performed by the robot 3 based on an instruction provided in the past is indicated with, for example, the status symbol 337 or the status string 346 on the list 330 (refer to FIG. 25), the detail screen 340 (refer to FIG. 27), or the detail screen 350 (refer to FIG. 28). The user can thus select the destination target robot 3 after confirming the status of each of the tasks performed by the robot 3 based on an instruction provided in the past. This allows the user to select the destination target robot 3 easily.

In this example, the results of each of the tasks performed by the robot 3 based on an instruction provided in the past are displayed, for example, on the list 330, the detail screen 340, the detail screen 350, or the dashboard 360 (refer to FIG. 29). The user can thus select the destination target robot 3 after confirming the results of each of the tasks performed by the robot 3 based on an instruction provided in the past. This allows the user to select the destination target robot 3 easily.

In this example, the capability information screen 370 (refer to FIG. 30) displays, for example, the capabilities of the corresponding robot 3. The user can thus select the destination target robot 3 after confirming the capabilities of the corresponding robot 3. This allows the user to select the destination target robot 3 easily.

### Display of Detailed Information about Task

When the user selects the task-related information 160 displayed on the main screen 50, a task detail screen 400 indicating detailed information about the task corresponding to the selected task-related information 160 appears on the main screen 50. When the input unit 12 receives a selection input for selecting the task-related information 160, the task detail screen 400 appears on the right screen 51 of the main screen 50 on the display 13, in place of the dashboard 60. The selected task-related information 160 is, for example, highlighted. The task corresponding to the selected task-related information 160 may hereafter be referred to as a selected task.

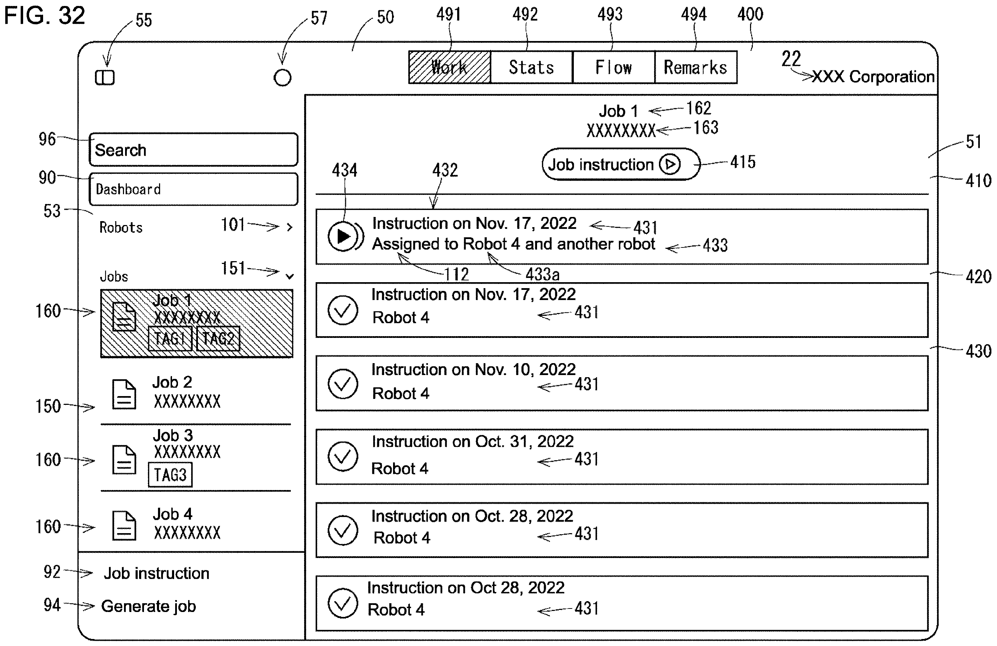

FIG. 32 is a schematic diagram of the main screen 50 including the task detail screen 400, illustrating an example display. In the example in FIG. 32, the task-related information 160 about the task with the name 162 being "Job 1" is selected.

The task detail screen 400 includes, for example, a basic screen 410 indicating basic information about the selected task and a detail screen 420 indicating detailed information about the selected task. The task detail screen 400 also includes multiple instruction areas 491, 492, 493, and 494 for switching the display on the detail screen 420.

The basic screen 410 includes, for example, the name 162 of the selected task and the overview 163 of the selected task. The basic screen 410 includes an instruction area 415, which is the same as or similar to the instruction areas 92 and 315. When the instruction area 415 is selected, the task selection screen 200 described above appears on the display 13. In this case, the task identification information 201 about the selected task is selected on the task selection screen 200.

The instruction area 491 is an area for providing an instruction to display, as the detail screen 420, a list 430 listing instructions to perform the selected task provided in the past. The instruction area 492 is an area for providing an instruction to display a result screen 460 displaying the results of the selected task performed in the past. The instruction area 493 is an area for providing an instruction to display a task detail screen 470 displaying the details of the selected task. The instruction area 494 is an area for providing an instruction to display a remark screen 490 displaying a remark about the selected task.

When the instruction area 491 is selected, the list 430 appears as the detail screen 420 as illustrated in FIG. 32. The list 430 includes multiple pieces of instruction-related information 431 about instructions to perform the selected task provided in the past. As described above, in this example, an instruction provided to the robot 3 to perform a task is an instruction to perform the task processing that is to be performed at least once. Thus, each of the multiple pieces of instruction-related information 431 is information about the task processing of the selected task (also referred to as selected task processing) that is to be performed at least once. The instruction-related information 431 includes, for example, a date 432 on which an instruction to perform the selected task is provided (in other words, the date 432 on which an instruction to perform the selected task processing is provided). The date 432 may be, for example, the date on which the instruction area 235 (refer to FIG. 23) included in the confirmation screen 230 described above is selected.

The instruction-related information 431 includes determination information 433 for determining the target robot 3 receiving an instruction to perform the selected task processing. The determination information 433 may include, for example, the name 112 of the target robot 3 receiving the instruction to perform the selected task processing. When multiple target robots 3 receive the instruction to perform the selected task processing, in this example, the determination information 433 includes the name 112 of one of the multiple target robots 3 receiving the instruction to perform the task alone. The determination information 433 also includes information 443a indicating that another target robot 3 has received the instruction to perform the task in addition to the target robot 3 having the name 112 included in the determination information 433.

Each of the multiple pieces of instruction-related information 431 includes a status symbol 434 indicating the status of the selected task processing performed by the target robot 3 receiving the instruction to perform the selected task processing. The status symbols 434 include four types of status symbols 434a to 434d. The multiple pieces of instruction-related information 431 each include one of the four types of status symbols 434a to 434d.

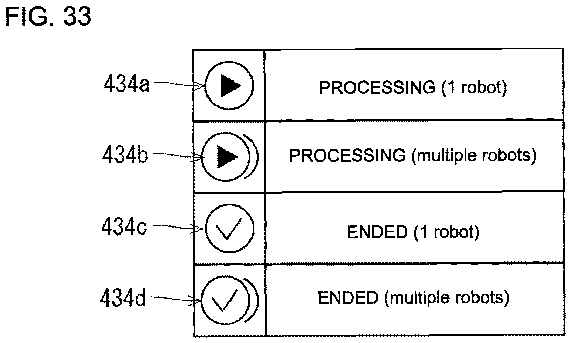

FIG. 33 is a schematic diagram of the four types of example status symbols 434a to 434d. The status symbol 434a indicates that a single target robot 3 has received the instruction to perform the selected task processing, and the selected task processing is being performed (in other words, being processed) by the single target robot 3. The status symbol 434b indicates that multiple target robots 3 have received the instruction to perform the selected task processing, and the selected task processing is being performed by at least one of the multiple target robots 3. The status symbol 434c indicates that a single target robot 3 has received the instruction to perform the selected task processing, and the single target robot 3 has ended the selected task processing. The status symbol 434d indicates that multiple target robots 3 have received the instruction to perform the selected task processing, and all the multiple target robots 3 have ended the selected task processing.

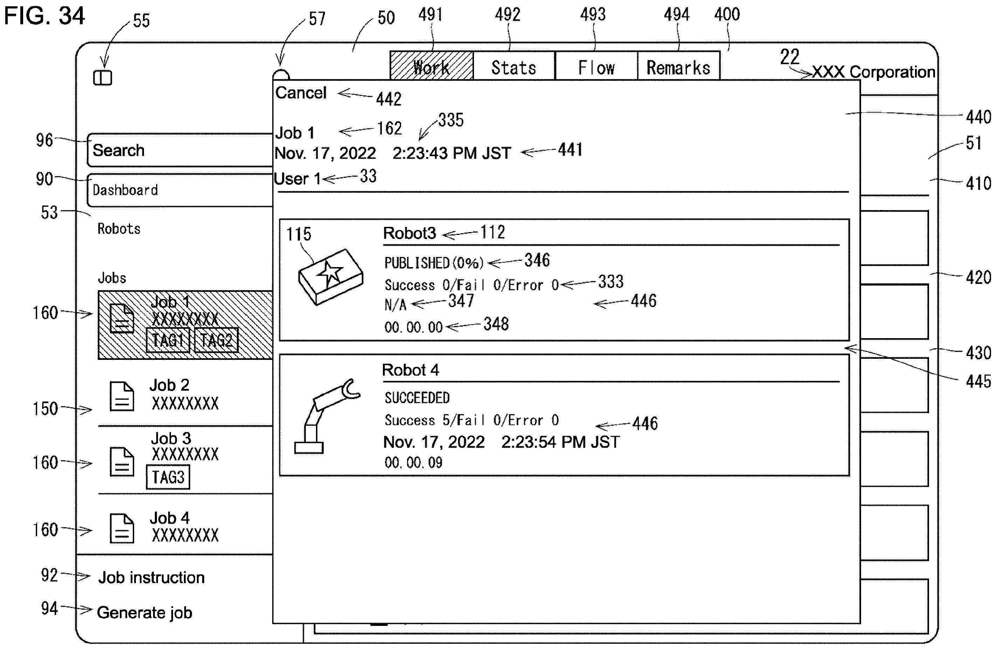

When the user selects the instruction-related information 431, a detail screen 440 indicating detailed information about the instruction to perform the task corresponding to the selected instruction-related information 411 appears on the display 13. FIG. 34 is a schematic diagram of an example of the detail screen 440.

As illustrated in FIG. 34, the detail screen 440 is, for example, displayed on the main screen 50. The detail screen 440 has a similar structure to the detail screen 340 described above (refer to FIG. 27). The detail screen 440 displays basic information 441 about the instruction to perform the selected task processing, detailed information 445 about the instruction to perform the selected task processing, and an instruction area 442.

The basic information 441 includes the name 162 of the selected task and the instruction date and time 335 at which the instruction is provided to the target robot 3 to perform the selected task processing. The basic information 441 includes the user identification information 33 of the user when the instruction is provided to the target robot 3 to perform the selected task processing.

The detailed information 445 includes, for each of the target robots 3 receiving the instruction to perform the selected task processing, task-performing information 446 about performing the selected task processing performed by the target robot 3.

The task-performing information 446 includes information that is the same as or similar to the detailed information 345 described above (refer to FIG. 27). The task-performing information 446 includes the name 112 of the target robot 3 receiving the instruction to perform the selected task processing and the image 115 schematically illustrating the appearance of the target robot 3 receiving the instruction to perform the selected task processing. The task-performing information 446 includes the result information 333 indicating the results of the selected task processing performed by the target robot receiving the instruction to perform the selected task processing, and the status string 346 indicating the status of the selected task processing. The task-performing information 446 includes the date and time 347 at which the selected task processing is started and the time duration 348 from the start to the end of the selected task processing.

In the example in FIG. 34, the target robot 3 with the name 112 being "Robot 3" receiving the instruction to perform the selected task processing has not detected the receiving instruction to perform the selected task processing as indicated by the status symbol 337 and the status string 346. Thus, the date and time 347 at which the selected task processing is started is indicated as "N/A," and the time duration 348 from the start to the end of the selected task processing is indicated as "00.00.00," or in other words, 0 seconds. The result information 333 indicates that the number next to "Error" indicating the number of errors, the number next to "Fail" indicating the number of failures, and the number next to "Success" indicating the number of task successes are all "0."

The instruction area 442 is an area for providing an instruction to switch between displaying and hiding the detail screen 440. When the instruction area 442 is selected, the display 13 hides the detail screen 440.

Note that the detail screen 440 may include an instruction area, which is the same as or similar to the instruction areas 92, 315, and 415. When a selection input for selecting the instruction area is received, all the target robots 3 displayed on the detail screen 440 may receive the instruction to perform the selected task. The target robot 3 may be instructed to perform the task processing with the same task conditions as in the previous task processing, including the count of tasks.

When the task-performing information 446 is selected by the user, a detail screen indicating detailed information about the selected task processing performed by the target robot 3 corresponding to the selected task-performing information 446 appears on the display 13. The detail screen has the same structure as the detail screen 350 described above (refer to FIG. 28).

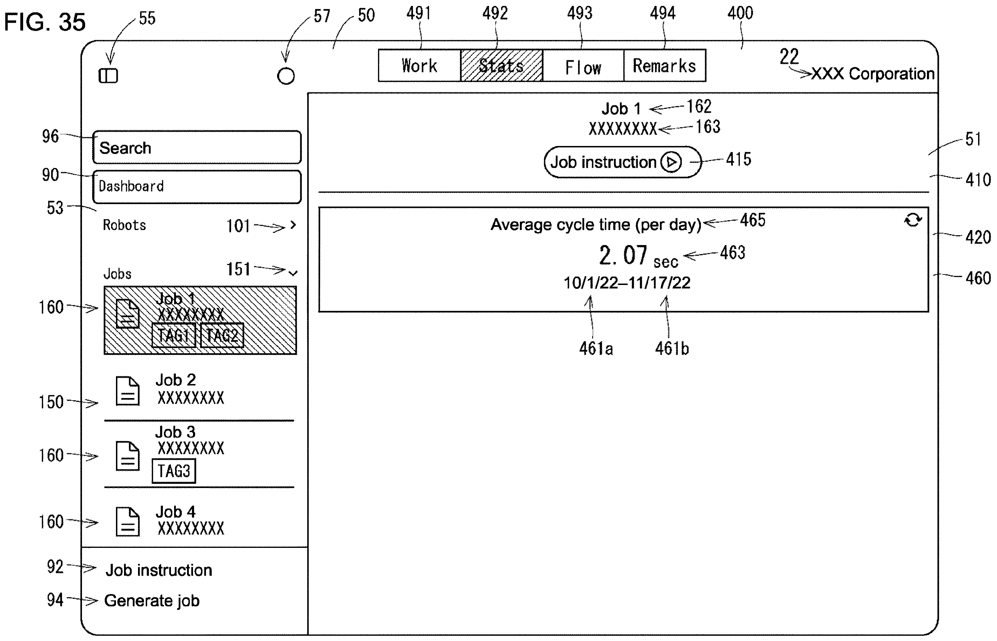

When the instruction area 492 is selected, the result screen 460 appears as the detail screen 320. FIG. 35 is a schematic diagram of the main screen 50 including the result screen 460 as the detail screen 320, illustrating an example display. The result screen 460 displays the results of the selected task performed in a predetermined period. The result screen 460 includes an input area 461a for inputting a start date of the predetermined period and an input area 461b for inputting an end date of the predetermined period. The input area 461a is selected to input the start date of the predetermined period into the information processing device 1. The input start date appears in the input area 461a. In the same or a similar manner, the input area 461b is selected to input the end date of the predetermined period into the information processing device 1. The input end date appears in the input area 461b.

The result screen 460 displays an average cycle time 465 of the selected task performed in the predetermined period. The result screen 460 displays, for example, the average cycle time 465 per day.

Information displayed on the result screen 460 is not limited to the above example. The result screen 460 may display, for example, a biaxial graph similar to the biaxial graphs 86 and 366 showing the number of task errors, the number of task failures, the number of task successes, the proportion of task errors, and the proportion of task failures in the selected task performed in the predetermined period.

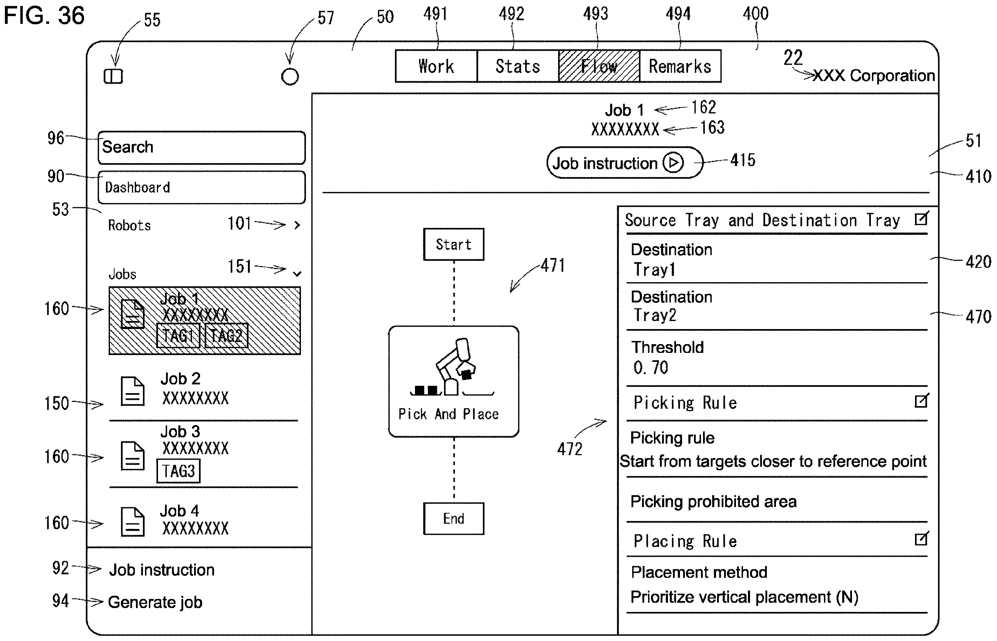

When the instruction area 493 is selected, the task detail screen 470 appears as the detail screen 320. FIG. 36 is a schematic diagram of the main screen 50 including the task detail screen 470 as the detail screen 420, illustrating an example display. As illustrated in FIG. 36, the task detail screen 470 includes a flowchart 471 showing the details of the selected task, and parameter information 472 indicating various parameters for the selected task.

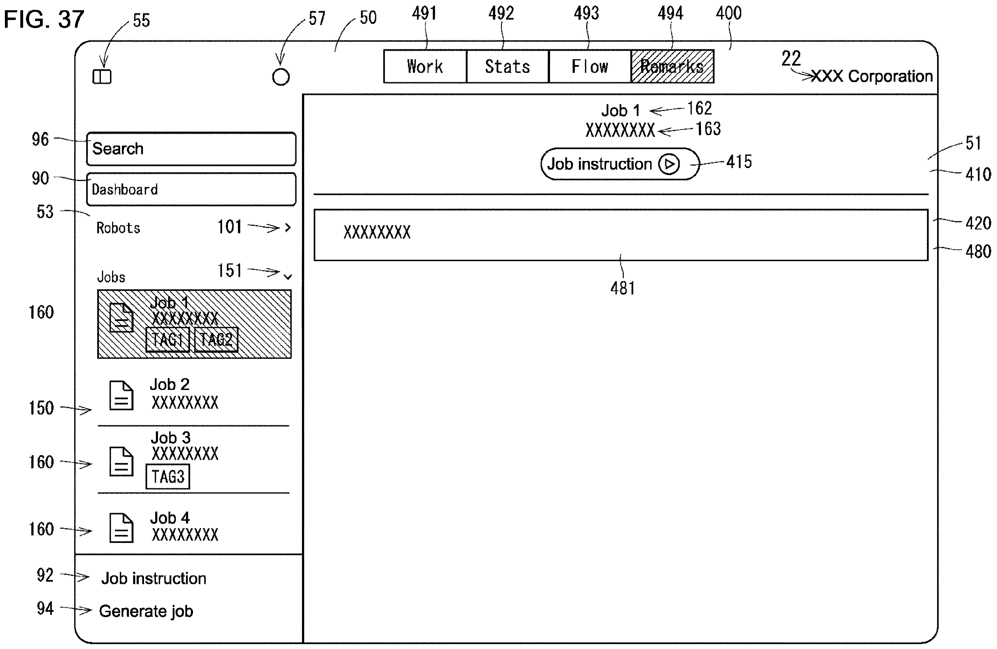

When the instruction area 494 is selected, a remark screen 480 appears as the detail screen 420. FIG. 37 is a schematic diagram of the main screen 50 including the remark screen 480 as the detail screen 420, illustrating an example display. As illustrated in FIG. 37, the remark screen 480 includes an input area 481 for inputting a remark about the selected task. The user selects the input area 481 to input a remark into the information processing device 1. When the user inputs a remark into the input unit 12, the input remark appears in the input area 481.

As described above, in this example, the status of the task performed by a robot 3 based on an instruction provided in the past is, for example, displayed with the status symbol 434, the status symbol 337, or the status string 346 on the list 430 (refer to FIG. 32) or the detail screen 440 (refer to FIG. 34). The user can thus select the target task after confirming the status of the task performed by the robot 3 based on an instruction provided in the past. This allows the user to select the target task easily.

In this example, the results of the task performed by the robot 3 based on an instruction provided in the past are displayed on, for example, the detail screen 440 or the result screen 460 (refer to FIG. 35). The user can thus select the target task after confirming the results of the task performed by the robot 3 based on an instruction provided in the past. This allows the user to select the target task easily.

### Other Examples

The display 13 may display information about the target robot 3 selectable on the robot selection screen 210 that failed to perform a target task in the past. This allows the user to select the destination target robot 3 easily.

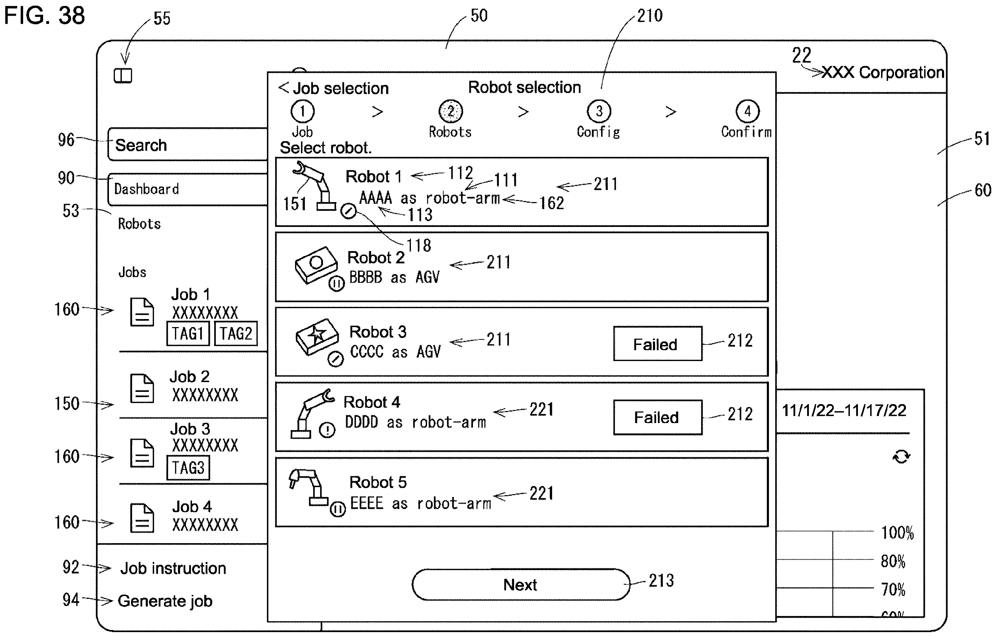

FIG. 38 is a schematic diagram of the display 13 displaying information indicating that the target robot 3 failed to perform a target task in the past, illustrating an example display. For example, the robot selection screen 210 displays, near the robot-related information 211 about the target robot 3 that failed to perform a target task in the past, a notification 212 indicating that the target robot 3 failed to perform the target task in the past. The display 13 can thus notify the user of the target robot 3 that failed to perform the target task selected by the user in the past.

The display 13 may also display information indicating that the target robot 3 selectable on the robot selection screen 210 includes no installed software used to perform the target task. This allows the user to select the destination target robot 3 easily.

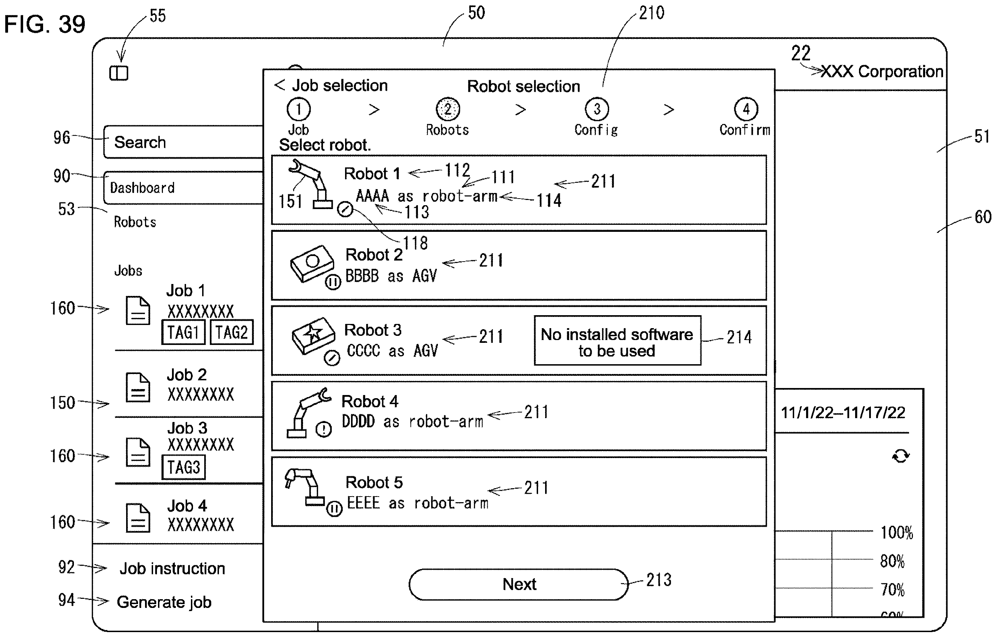

FIG. 39 is a schematic diagram of the display 13 displaying information indicating that the target robot 3 selectable on the robot selection screen 210 includes no installed software used to perform the target task, illustrating an example display. The robot selection screen 210 displays, near (e.g., on the right of) the robot-related information 211 about the target robot 3 with no installed software used to perform the target task, a notification 214 indicating that the target robot 3 includes no installed software used to perform the target task. The display 13 can thus notify the user of the target robot 3 with no installed software used to perform the target task selected by the user. The target robot 3 corresponding to the notification 214 hereafter refers to the target robot 3 corresponding to the robot-related information 211 displayed on the left of the notification 214.

When the robot selection screen 210 is displayed, for example, the information processing device 1 inquires the server 2, for example, whether the target robot 3 includes installed software used to perform the target task selected by the user. The server 2 determines whether the target robot 3 includes installed software used to perform the target task based on, for example, the robot-related information stored in the target individual database, and notifies the information processing device 1 of the determination result. The information processing device 1 can thus determine whether each of the target robots 3 includes installed software used to perform the target task.

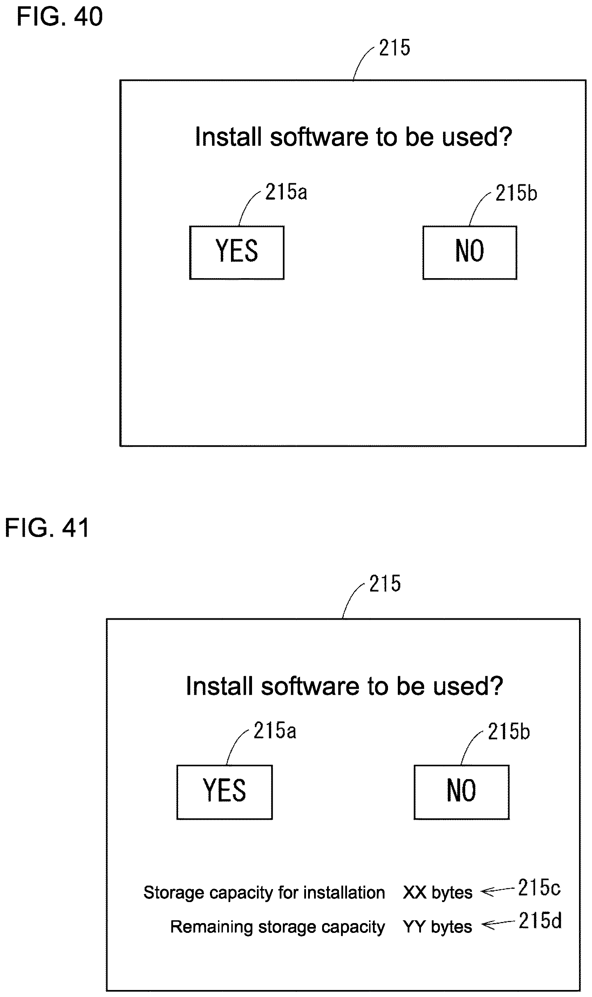

When the notification 214 is selected by the user, the display 13 may display an inquiry screen 215 for inquiring the user whether software used to perform the target task (simply referred to as software to be used) is to be installed into the target robot 3 corresponding to the notification 214 that has been selected (also referred to as selected notification 214). FIG. 40 is a schematic diagram of an example of the inquiry screen 215. The inquiry screen 215 is, for example, displayed on the robot selection screen 210.

The inquiry screen 215 includes an instruction area 215a for providing an instruction to install the software to be used, and an instruction area 215b for providing an instruction to not install the software to be used. When the instruction area 215a is selected, the information processing device 1 instructs the server 2 to transmit software to be used to the target robot 3 corresponding to the selected notification 214. The server 2 that has received the instruction transmits the software to be used and registered in the common database or the target individual database to the target robot 3 corresponding to the selected notification 214. The software to be used is thus installed into the target robot 3 corresponding to the selected notification 214. When the instruction area 215a is selected, the inquiry screen 215 is deleted. When the instruction area 215b is selected, the inquiry screen 215 is deleted without installing the software to be used in the target robot 3 corresponding to the selected notification 214.

As illustrated in FIG. 41, the inquiry screen 215 may include information 215c indicating the storage capacity for installing the software to be used, and information 215d indicating the remaining storage capacity in the robot controller 3a in the target robot 3 corresponding to the selected notification 214. When the storage capacity for installing the software to be used is larger than the remaining storage capacity in the robot controller 3a in the target robot 3 corresponding to the selected notification 214, the instruction area 215a on the inquiry screen 215 may be unselectable. In this case, the instruction area 215a may be grayed out. When the robot 3 is in the status indicated by the notification 214, the robot-related information 211 about the robot 3 may be hidden on the robot selection screen 210.

The display 13 may display information indicating that the target robot 3 selectable on the robot selection screen 210 cannot perform the target task. This allows the user to select the destination target robot 3 easily.

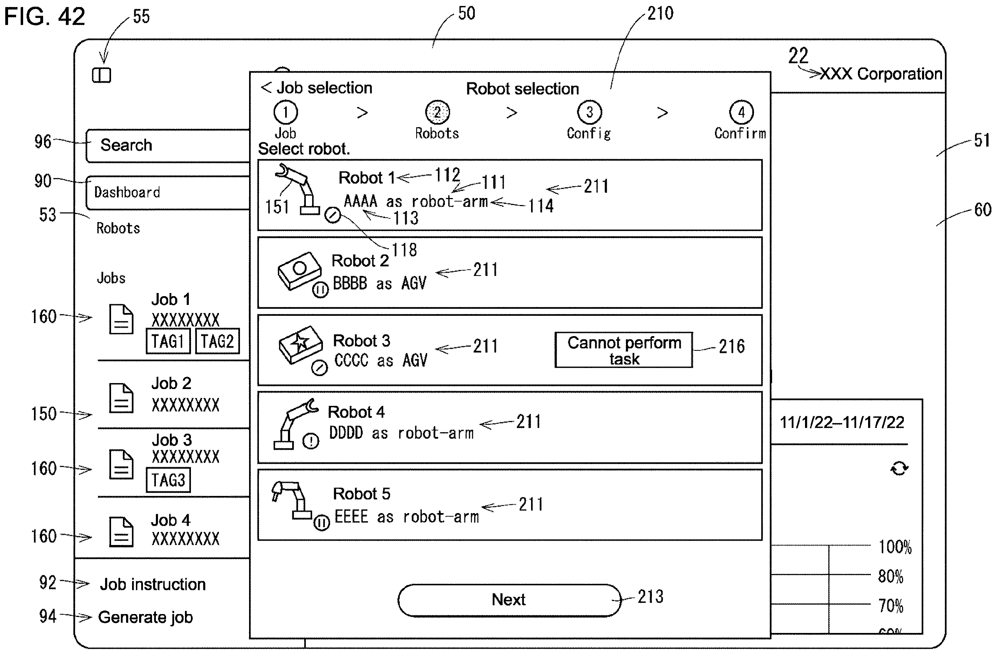

FIG. 42 is a schematic diagram of the display 13 displaying information indicating that the target robot 3 selectable on the robot selection screen 210 cannot perform the target task, illustrating an example display. The robot selection screen 210 displays, near the robot-related information 211 about the target robot 3 that cannot perform the target task, a notification 216 indicating that the target robot 3 cannot perform the target task. The display 13 can thus notify the user of the target robot 3 that cannot perform the target task selected by the user. When the robot 3 is in the status indicated by the notification 216, the robot-related information 211 about the robot 3 may be hidden on the robot selection screen 210.

When the robot selection screen 210 is displayed, the information processing device 1 inquires, for example, the server 2 whether the target robot 3 can perform the selected target task. The server 2 determines whether the target robot 3 can perform the target task based on, for example, the robot-related information stored in the target individual database, and notifies the information processing device 1 of the determination result. The information processing device 1 can thus determine whether the target robot 3 can perform the target task. Whether the target robot 3 can perform the target task depends on the details of the target task and the capabilities of the target robot 3. When the target task is specific to a robotic arm, an AGV cannot perform the target task. When the target task is specific to a dual-arm robot, a single-arm robot and an AGV cannot perform the target task. The target robot 3 without the installed software used to perform the target task cannot perform the target task.

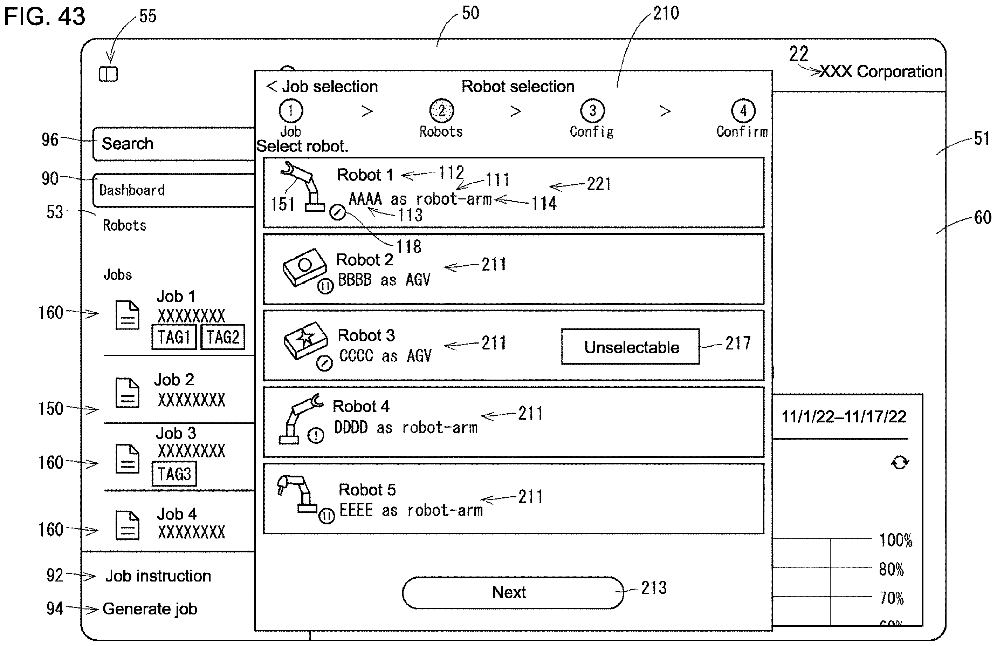

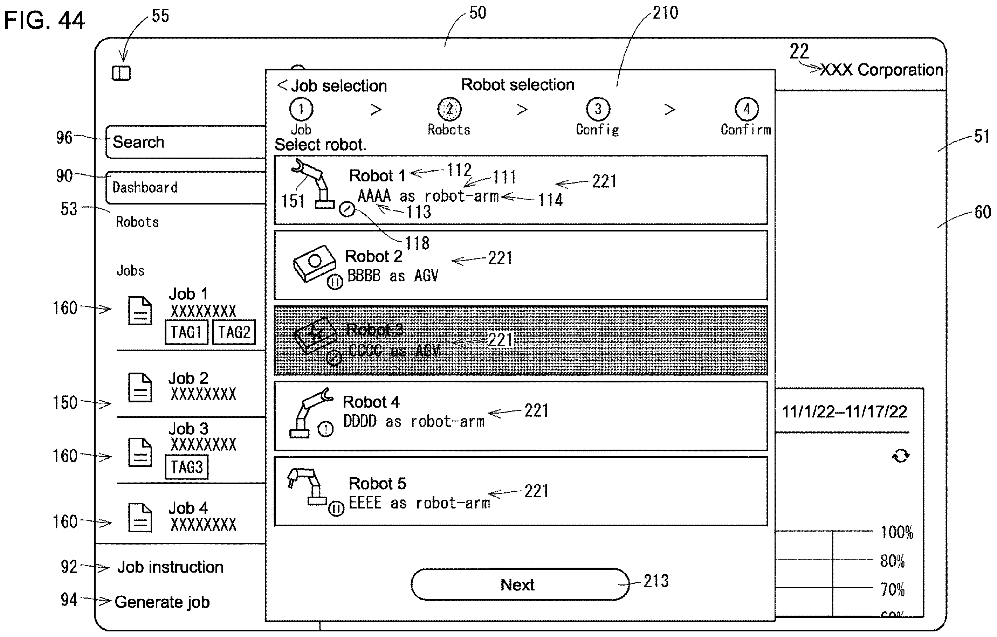

The target robot 3 that cannot perform the target task may be unselectable on the robot selection screen 210. More specifically, the robot-related information 211 about the target robot 3 that cannot perform the target task may be unselectable on the robot selection screen 210. In this case, as illustrated in FIG. 43, a notification 217 indicating that the robot-related information 211 is unselectable may be displayed near the unselectable robot-related information 211. As illustrated in FIG. 44, the unselectable robot-related information 211 may be grayed out. In the example in FIG. 44, the third robot-related information 211 from the top is grayed out.

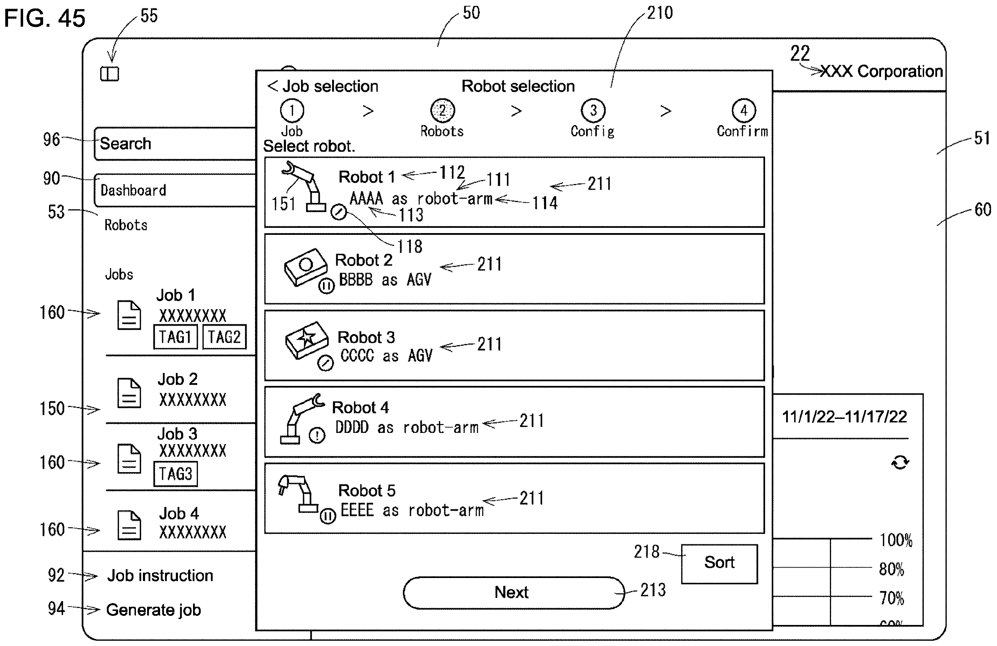

The display 13 may also sort the multiple pieces of robot-related information 211 on the robot selection screen 210. This improves the user convenience of the information processing device 1. The multiple pieces of robot-related information 211 on the robot selection screen 210 being sortable refers to the multiple pieces of robot identification information 111 included in the respective multiple pieces of robot-related information 211 on the robot selection screen 210 being sortable. For example, as illustrated in FIG. 45, the robot selection screen 210 may include an instruction area 218 for providing an instruction to sort the multiple pieces of robot-related information 211. When the instruction area 218 is selected by the user, the display 13 sorts the multiple pieces of robot-related information 211 based on a predetermined sorting rule.

For example, the display 13 may sort the multiple pieces of robot-related information 211 about the respective target robots 3 in ascending order of scheduled start time of the target task performance. In this case, the server 2 estimates the scheduled start time of the target task performance for each of the target robots 3 based on the status of each of the target robots 3, and notifies the information processing device 1 of the estimation results. The information processing device 1 can thus determine the scheduled start time of the target task performance for each of the target robots 3 to sort the multiple pieces of robot-related information 211.

The display 13 may also sort the multiple pieces of robot-related information 211 about the respective target robots 3 in descending order of the success rate of the target task performed in the past. In this case, the server 2 calculates the success rates of the target tasks performed by the respective target robots 3 in the past, and notifies the information processing device 1 of the calculation results. The information processing device 1 can thus determine the success rate of the target task performed by each of the target robots 3 in the past to sort the multiple pieces of robot-related information 211.

The display 13 may also sort the multiple pieces of robot-related information 211 in the order in which the robot-related information 211 about the target robot that can perform the target task precedes the robot-related information 211 about the target robot 3 that cannot perform the target task.

The user may also select the instruction area 218 to input and designate the sorting rule into the input unit 12. This improves the user convenience of the information processing device 1.

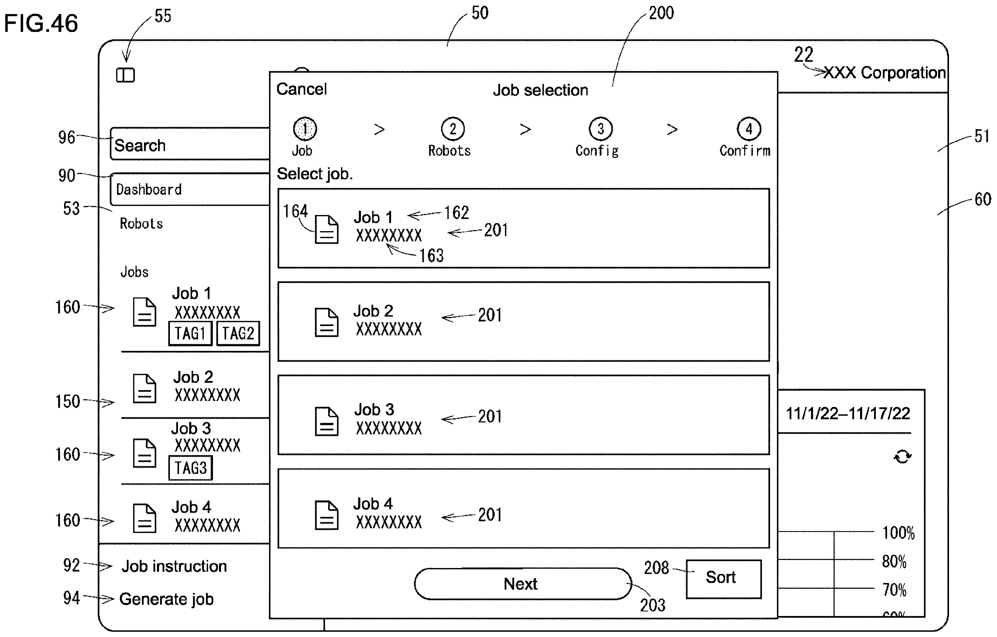

In the same or a similar manner, the display 13 may sort multiple pieces of task identification information 201 on the task selection screen 200. This improves the user convenience of the information processing device 1. For example, as illustrated in FIG. 46, the task selection screen 200 may include an instruction area 208 for providing an instruction to sort the multiple pieces of task identification information 201. When the instruction area 208 is selected by the user, the display 13 sorts the multiple pieces of task identification information 201 based on the predetermined sorting rule.

For example, the display 13 may sort the multiple pieces of task identification information 201 in the order in which the task identification information 201 generated at a time closer to the current time precedes the others. In this case, the task identification information 201 may include information indicating the time at which the details of the task specified in the task identification information 201 are generated.

The display 13 may sort the multiple pieces of task identification information 201 to allow the multiple pieces of task identification information 201 to be displayed in groups corresponding to the respective users. A user corresponding to the task identification information 201 is a user signed in when the details of the task specified in the task identification information 201 are generated in the information processing device 1. In this case, the task identification information 201 may include the user identification information 33 about the corresponding user.

The display 13 may sort the multiple pieces of task identification information 201 to allow the multiple pieces of task identification information 201 to be displayed in groups corresponding to the respective types of robots 3 used. The type of the robot 3 used corresponding to the task identification information 201 is the type of the robot 3 used to generate the details of the task specified in the task identification information 201. In this case, the task identification information 201 may include information indicating the type of the corresponding robot 3 used.

The user may also select the instruction area 208 to input and designate the sorting rule into the input unit 12. This improves the user convenience of the information processing device 1.

In the same or a similar manner, the display 13 may also sort, for example, the multiple pieces of robot-related information 110 on the robot list 100 illustrated in FIG. 5. The display 13 may also sort, for example, multiple pieces of task-related information 160 on the task list 150 illustrated in FIG. 6.

The display 13 may also display information indicating that the target robot 3 selectable on the robot selection screen 210 is performing a task. This allows the user to select the destination target robot 3 easily.

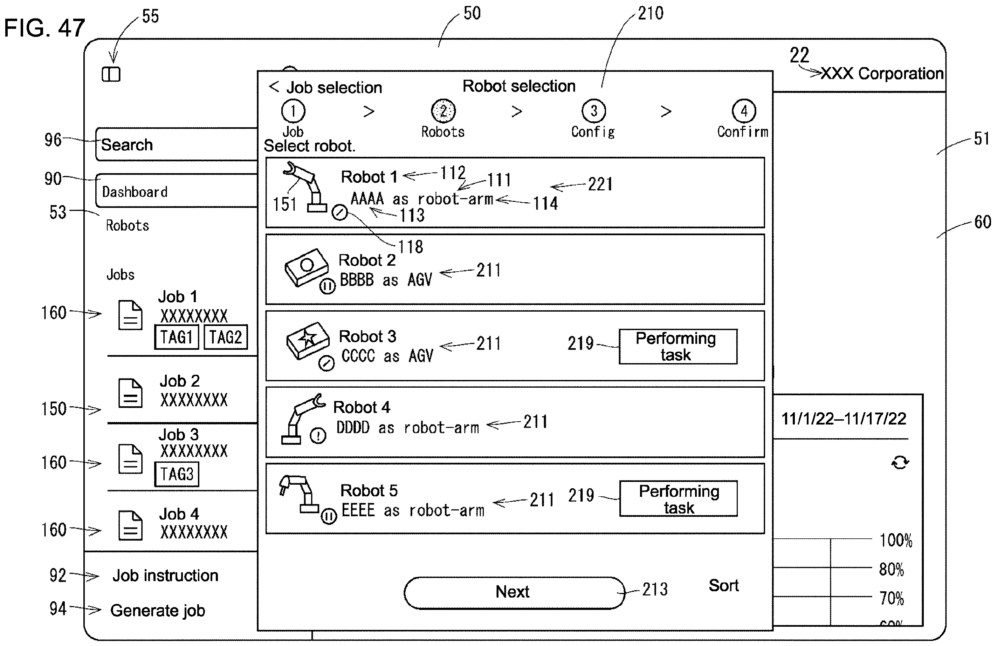

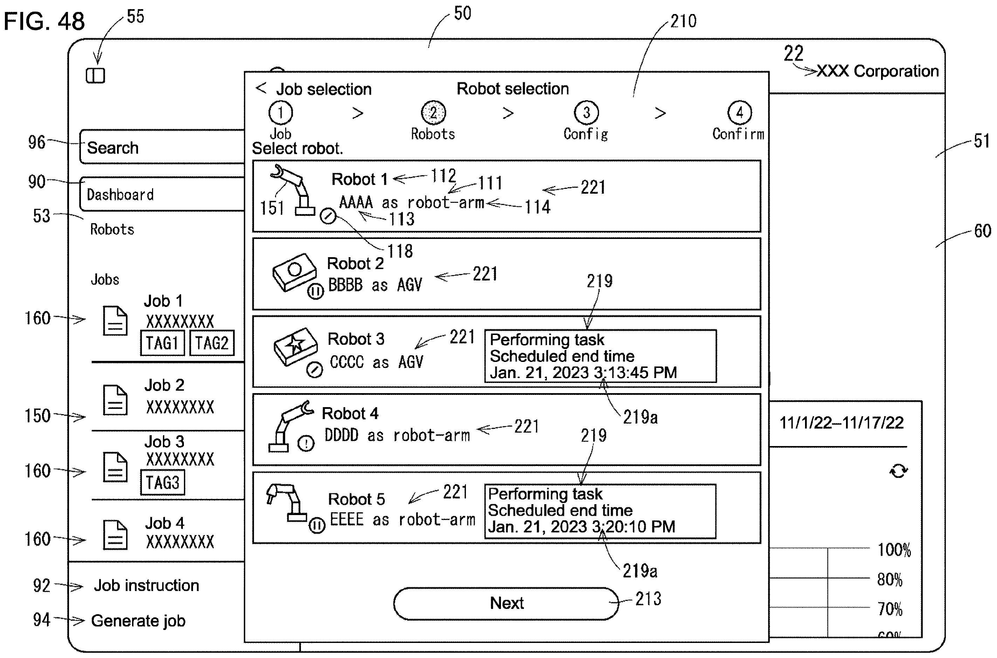

FIG. 47 is a schematic diagram of the display 13 displaying information indicating that the target robot 3 selectable on the robot selection screen 210 is performing a task, illustrating an example display. The robot selection screen 210 displays, near the robot-related information 211 about the target robot 3 that is performing a task, a notification 219 indicating that the target robot 3 is performing a task. The display 13 can thus notify the user of the target robot 3 performing a task. As illustrated in FIG. 48, the notification 219 may include information 219a indicating a scheduled end time of the task in progress.

In the above example, the robot 3 being the destination of the target task among the multiple robots 3 managed by the target tenant is selectable on the robot selection screen 210. The robot 3 being the destination of the target task among the multiple robots 3 managed by the signed-in user among the multiple users included in the target tenant may be selectable and the robot 3 being the destination of the target task among the multiple robots 3 managed by a user other than the signed-in user may be unselectable. In this case, the information processing device 1 may simply display information about the robot managed by the signed-in user among the information about the multiple robots managed by the target tenant.

The task with the details generated by the signed-in user of the multiple users included in the target tenant alone may be selectable as the target task on the task selection screen 200. The task with details generated by a user other than the signed-in user may be unselectable as the target task. In this case, the information processing device 1 may simply indicate information about the task with the details generated by the signed-in user, among information about the tasks with details generated by the multiple users included in the target tenant.

The users included in the target tenant, the robots managed by the target tenant, and the tasks with details generated by the users included in the target tenant may be allocated into groups. In this case, for example, a user included in a group can select, on the robot selection screen 210 and the task selection screen 200, robots and tasks included in the same group, and cannot select robots and tasks included in other groups. In this case, the robots and the tasks in other groups that cannot be selected may not be displayed. When groups are defined, "target tenants" herein can be referred to as "groups" as appropriate. A user may be included in multiple different groups. In this case, for example, a user included in groups A and B can select robots and tasks included in the group A or B on the robot selection screen 210 and the task selection screen 200. A robot not in a defined group may be selected by a user in any group or a user not in a defined group. A task not in a defined group may be selected by a user in any group or a user not in a defined group. Note that the group may be defined for each site such as a factory or a business office of a corporation, or for each organization at each site.

Although the information processing device 1 is used to provide an instruction for the robot 3 to perform a task in the above example, the information processing device 1 may also be used to provide, for example, an instruction to perform a system task. For example, when a camera is located adjacent to the robot 3, an instruction to perform calibrating the camera may be provided through the information processing device 1. An instruction to perform updating software of the robot 3, the robot controller 3a, and its peripheral devices (e.g., a camera or a programmable logic controller or PLC) may also be provided. An instruction to perform a system task may be provided using an information processing device 1 of a user different from an information processing device 1 of a user who instructs the robots 3 to perform tasks.

In the above example, the robotic system 5 applies the multi-tenant system to use resources provided by the server 2. However, another method may be used.

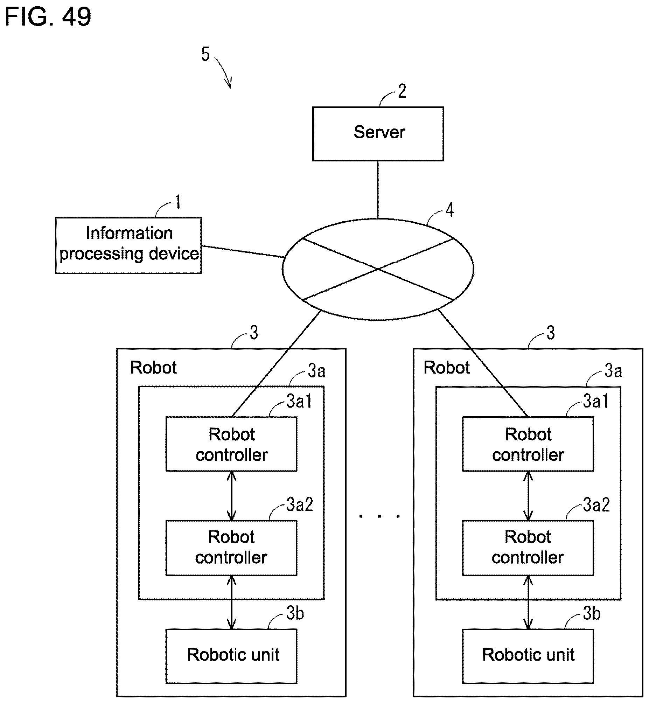

At least one of the multiple robots 3 may include multiple robot controllers 3a. FIG. 49 is a schematic diagram of an example robotic system 5 in this case.

In the example in FIG. 49, the robot controller 3a in each of the robots 3 includes robot controllers 3a1 and 3a2. The robot controllers 3a1 and 3a2 are, for example, computers. The robot controllers 3a1 and 3a2 may have, for example, the same structure as or a similar structure to the information processing device 1. The various types of processing performed by the robot controller 3a described above are performed by one of the robot controllers 3a1 and 3a2 or by both of the robot controllers 3a1 and 3a2 performing in cooperation with each other. The robot controllers 3a1 and 3a2 may be installed in the same environment as the robots 3 or the robot controller 3a1 may be installed in the cloud.

The robot controller 3a1 is connected to the network 4. The robot controller 3a1 can communicate with the server 2 through the network 4. The robot controller 3a1 receives, for example, the task instruction information described above from the server 2. The robot controller 3a1 transmits, for example, the task status information, the task result information, and the robot status information described above to the server 2. The robot controller 3a1 may communicate with the information processing device 1 through the network 4, such as a wide area network (WAN).

The robot controller 3a1 can communicate with the robot controller 3a2 through, for example, a local area network (LAN). In the robot controller 3a1, the WAN and the LAN are connected independently of each other. This prevents the robot controller 3a2 from being unintendedly connected to the WAN. The server 2 may perform individual authentication based on a certificate issued for the corresponding robot controller 3a2. This prevents unauthorized access to the server 2 from a device other than the robot controller 3a2. The certificates may be managed by the server 2 for each tenant. The robot controller 3a2 can thus prevent the server 2 from performing instructions provided by a tenant other than the associated tenants. The robot controller 3a1 may perform wired or wireless communication with the robot controller 3a2. The robot controller 3a2 can control the robotic unit 3b. The robot controller 3a1 can control the robot controller 3a2 based on instructions from the server 2. Multiple robot controllers 3a2 may be connected to a single robot controller 3a1.

The robotic unit 3b and the robot controller 3a2 that controls the robotic unit 3b may be collectively referred to as a robotic device. In this case, the robot controller 3a1 may be provided by a provider of the robotic device or by another provider. The robot controller 3a1 may be provided by a provider of the cloud service using the server 2 or by another provider.

The robot controller 3a1 may execute, for example, software to be used for performing the target task. The software to be executed by the robot controller 3a1 may include software installed from the server 2 into the robot controller 3a1 or software prestored in the robot controller 3a1. The software executed by the robot controller 3a1 may include, for example, AI-based software including a neural network. More specifically, the software executed by the robot controller 3a1 may include machine learning software used to perform, for example, instance segmentation. The robot controller 3a1 executing AI-based software may be referred to as, for example, an AI controller.

The software executed by the robot controller 3a1 may include non-AI-based software or algorithm-based software. For example, the software executed by the robot controller 3a1 may include software for performing image detection using, for example, template matching, or may include a program coded based on a rule-based algorithm. The software executed by the robot controller 3a1 may also include, for example, an operating system (OS) for the robotic unit 3b, a program for improving functionality, or a security program for ensuring security of, for example, the robotic unit 3b. The software including a security program and installed in the robot 3 may be automatically installed by the server 2 into the robot 3.

For example, the information processing device 1 may determine, based on the target task to be performed based on an instruction provided by the information processing device 1, whether information (e.g., software) used to perform the target task is installed in the robot controller 3a (e.g., the robot controller 3a1) that controls the robotic unit 3b that performs the target task. In this case, when the intended information is not installed in the robot controller 3a, the information may be installed into the robot controller 3a from the server 2. The information processing device 1 or the server 2 may determine the software to be installed into the robot controller 3a based on, for example, the manufacturer, the model, or the type of the robot 3 and the manufacturer, the model, or the type of equipment such as the camera installed in the surrounding environment of the robot 3. The information such as the model or the type of the robot 3 (e.g., an arm or an end effector) and the information such as the model or the type of equipment such as the camera installed in the surrounding environment of the robot 3 may be obtained from, for example, the robot controller 3a1.

The software stored in the robot controller 3a may be deleted or updated through the information processing device 1. The software stored in the robot controller 3a may be updated, deleted, or added by the server 2.

The AI-based software executed by the robot controller 3a1 may include, for example, AI-based software (also referred to as object detection AI-based software) that detects objects based on camera images generated by the camera. The camera may be included in the robotic unit 3b (e.g., a camera attached to the end effector included in a robotic arm unit) or may be fixed at a position away from the robotic unit 3b. The camera images generated by the camera may include color images or depth images.

The target object to be detected by the object detection AI-based software executed by the robot controller 3a1 may be an object held by the robotic unit 3b (e.g., an industrial component or a piece of stationery). When the robotic unit 3b is to hold an object in the tray, the target object to be detected may be the tray in which the object to be held is placed. When the robotic unit 3b is to place an object being held into the tray, the target object to be detected may be the tray into which the object being held is to be placed. The target object to be detected may be, for example, a person approaching the movement range of the robot 3. The target object to be detected may be an obstacle that obstructs the movement of the robotic unit 3b.

The AI-based software executed by the robot controller 3a1 may include, for example, AI-based software for determining the part of the target object to be held by the robotic unit 3b based on the camera images generated by the camera.

The software such as the AI-based software stored in the robot controller 3a1 may be updated, deleted, or added by the server 2.

The robot controller 3a1 may also generate the target movement of the robotic unit 3b in the target task based on, for example, the results of object detection obtained by executing the object detection AI-based software. In other words, the robot controller 3a1 may plan the target movement of the robotic unit 3b. For example, the robotic unit 3b may be a robotic arm unit. In this case, the robot controller 3a1 generates the target movement of the arm in the robotic unit 3b. More specifically, the robot controller 3a1 determines the target posture of the arm at different times. For example, the robot controller 3a1 determines the target rotation angle of each joint of the arm at different times to generate the target movement of the arm.

When the target movement of the robotic unit 3b is generated, the robot controller 3a1 transmits target movement data indicating the generated target movement to the robot controller 3a2. The robot controller 3a2 controls the robotic unit 3b based on the target movement data received from the robot controller 3a1. In this case, the robot controller 3a2 may determine whether the robotic unit 3b can be moved as intended by the target movement indicated by the target movement data based on a predetermined rule. When determining that the robotic unit 3b can be moved as intended by the target movement indicated by the target movement data, the robot controller 3a1 controls the robotic unit 3b based on the target movement data. When determining that the robotic unit 3b cannot be moved as intended by the target movement indicated by the target movement data, the robot controller 3a1 may notify, for example, the robot controller 3a1 of the reason for not controlling the robotic unit 3b as intended by the target movement. When receiving the reason for not controlling the robotic unit 3b as intended by the target movement, the robot controller 3a1 may correct the target movement data based on the received reason, and transmit the corrected target movement data to the robot controller 3a2. The robot controller 3a2 can also monitor the movement of the robotic unit 3b. This allows the robot controller 3a2 to support, for example, emergency stopping of the robotic unit 3b based on, for example, the state of the motor included in the robotic unit 3b.

The robot controller 3a1 may manage, for example, information such as data to be used for improving the tasks performed by the robot 3, including improving the accuracy of AI. More specifically, the robot controller 3a1 may manage, for example, the log information and the metrics information about the robot 3. The robot controller 3a1 may manage the log information and the metrics information including the task status information, the task result information, and the robot status information described above. More specifically, the log information and the metrics information may include control parameters of the robots 3, setting information used for coordination among the robots 3, the peripheral devices, and the server 2, image data captured while the robots 3 are operating, or result information about image analysis performed on the image data. Note that information such as the setting information may be recorded in a nonvolatile area in the robot controller 3a. The image data or the analysis results of the image data may be recorded in a volatile area or a temporary area. Information such as the setting information may be managed with encryption, allowing users with access permission alone to access the information. The image data or the analysis results of the image data may be deleted from the robot controller 3a after the corresponding task. The image data or the analysis results of the image data may be deleted when the power supply of the robot 3 is turned off. Information such as the log information may be managed in time series.

The server 2 may manage, for example, the log information and the metrics information associated with, for example, operations performed on the server 2. The server 2 may manage information by changing the security level as appropriate for the information to be managed.

The robot controller 3a1 may regularly or irregularly transmit information managed by the robot controller 3a1 (e.g., the log information, the metrics information, and other data items to be used) to the server 2 in response to a request from the server 2. Data transmission between the robot controller 3a1 and the server 2 may be encrypted. Data transmission between the robot controllers 3a1 and 3a2 may be unencrypted. The robot controller 3a1 may transmit data to the server 2 by changing the security level as appropriate for the information to be transmitted, or by transmitting data to different areas each with a different security level.

The software stored in the robot 3 may include software executable by the robot controller 3a2. The software stored in the robot controller 3a2 may be updated, deleted, or added by the server 2.

The information processing device has been described in detail, but the above structures are illustrative in all respects, and the disclosure is not limited to the above structures. All the features of the embodiments described above may be combined in use unless any contradiction arises. Many variations not specifically described above may be implemented without departing from the scope of the disclosure.

The present disclosure provides the structures described below.

In one embodiment, (1) an information processing device includes a display, an input unit, an interface, and a controller. The input unit receives an input from a user. The interface communicates with a plurality of robots and a server. The server includes a plurality of pieces of robot identification information for identifying the plurality of robots. The controller obtains, through the interface, the plurality of pieces of robot identification information and a communication connection status of the plurality of robots with the server. The controller causes the display to display the plurality of pieces of robot identification information and the communication connection status in a viewable manner to allow selection of, through the input unit, at least one robot of the plurality of robots to perform at least one target task selected by the user from a plurality of tasks indicated by a plurality of pieces of task information generated using a robot of the plurality of robots.
(2) In the information processing device according to (1), the plurality of pieces of robot identification information includes identification information of a robot, of the plurality of robots, to which another information processing device is connectable to perform communication.
(3) In the information processing device according to (1) or (2), the display is configured to display types of the plurality of robots.
(4) In the information processing device according to any one of (1) to (3), the display is configured to display an operating status of the plurality of robots.
(5) In the information processing device according to any one of (1) to (4), the display is configured to display progress of a task performed by each of the plurality of robots based on an instruction provided in a past.
(6) In the information processing device according to any one of (1) to (5), the display is configured to display a result of a task performed by each of the plurality of robots based on an instruction provided in a past.
(7) In the information processing device according to any one of (1) to (6), the display is configured to display a capability of each of the plurality of robots.
(8) In the information processing device according to any one of (1) to (7), the display is configured to display a past failure of each of the plurality of robots in a target task of the plurality of tasks.
(9) In the information processing device according to any one of (1) to (8), the display is configured to display identification information of software installed in each of the plurality of robots.
(10) In the information processing device according to any one of (1) to (9), the display is configured to display incapability of each of the plurality of robots to perform a target task of the plurality of tasks.
(11) In the information processing device according to any one of (1) to (10), the controller causes, of the plurality of robots, a robot incapable of performing a target task of the plurality of tasks to be unselectable.
(12) In the information processing device according to any one of (1) to (11), the display is configured to sort the plurality of pieces of robot identification information.
(13) In the information processing device according to any one of (1) to (12), the display is configured to display a plurality of pieces of task identification information to allow selection of the at least one target task through the input unit.
(14) In the information processing device according to (13), the display is configured to sort the plurality of pieces of task identification information.
(15) In the information processing device according to any one of (1) to (14), the display is configured to display, for a task selectable as the at least one target task, a status of the task performed by a robot of the plurality of robots based on an instruction provided in a past.
(16) In the information processing device according to any one of (1) to (15), the display is configured to display, for a task selectable as the at least one target task, a result of the task performed by a robot of the plurality of robots based on an instruction provided in a past.
(17) A program is a program for causing a computer to function as the information processing device according to any one of (1) to (16).

### REFERENCE SIGNS

1 information processing device
3 robot
12 input unit
13 display
111 robot identification information
200 task selection screen
201 task identification information
210 robot selection screen

## Claims

1. An information processing device, comprising:
a display;
an input unit configured to receive an input from a user;
an interface configured to communicate with a plurality of robots and a server, the server including a plurality of pieces of robot identification information for identifying the plurality of robots; and
a controller configured to
obtain, through the interface, the plurality of pieces of robot identification information and a communication connection status of the plurality of robots with the server, and
cause the display to display the plurality of pieces of robot identification information and the communication connection status in a viewable manner to allow selection of, through the input unit, at least one robot of the plurality of robots to perform at least one target task selected by the user from a plurality of tasks indicated by a plurality of pieces of task information generated using a robot of the plurality of robots.

2. The information processing device according to claim 1, wherein
the plurality of pieces of robot identification information includes identification information of a robot, of the plurality of robots, to which another information processing device is connectable to perform communication.

3. The information processing device according to claim 1 or claim 2, wherein
the display is configured to display types of the plurality of robots.

4. The information processing device according to any one of claims 1 to 3, wherein
the display is configured to display an operating status of the plurality of robots.

5. The information processing device according to any one of claims 1 to 4, wherein
the display is configured to display progress of a task performed by each of the plurality of robots based on an instruction provided in a past.

6. The information processing device according to any one of claims 1 to 5, wherein
the display is configured to display a result of a task performed by each of the plurality of robots based on an instruction provided in a past.

7. The information processing device according to any one of claims 1 to 6, wherein
the display is configured to display a capability of each of the plurality of robots.

8. The information processing device according to any one of claims 1 to 7, wherein
the display is configured to display a past failure of each of the plurality of robots in a target task of the plurality of tasks.

9. The information processing device according to any one of claims 1 to 8, wherein
the display is configured to display identification information of software installed in each of the plurality of robots.

10. The information processing device according to any one of claims 1 to 9, wherein
the display is configured to display incapability of each of the plurality of robots to perform a target task of the plurality of tasks.

11. The information processing device according to any one of claims 1 to 10, wherein
the controller is configured to cause, of the plurality of robots, a robot incapable of performing a target task of the plurality of tasks to be unselectable.

12. The information processing device according to any one of claims 1 to 11, wherein
the display is configured to sort the plurality of pieces of robot identification information.

13. The information processing device according to any one of claims 1 to 12, wherein
the display is configured to display a plurality of pieces of task identification information to allow selection of the at least one target task through the input unit.

14. The information processing device according to claim 13, wherein
the display is configured to sort the plurality of pieces of task identification information.

15. The information processing device according to any one of claims 1 to 14, wherein
the display is configured to display, for a task selectable as the at least one target task, a status of the task performed by a robot of the plurality of robots based on an instruction provided in a past.

16. The information processing device according to any one of claims 1 to 15, wherein
the display is configured to display, for a task selectable as the at least one target task, a result of the task performed by a robot of the plurality of robots based on an instruction provided in a past.

17. A program for causing a computer to function as the information processing device according to any one of claims 1 to 16.
